(19) Europäisches Patentamt
European Patent Office
Office européen des brevets

(11) **EP 4 620 277 A1**

(12) **EUROPEAN PATENT APPLICATION**
published in accordance with Art. 153(4) EPC

(43) Date of publication:
**24.09.2025 Bulletin 2025/39**

(21) Application number: **23906394.4**

(22) Date of filing: **15.09.2023**

(51) International Patent Classification (IPC):
$A01B\ 69/00^{(2006.01)}$    $G05D\ 1/43^{(2024.01)}$
$G08G\ 1/16^{(2006.01)}$    $G01S\ 17/89^{(2020.01)}$
$G01S\ 17/931^{(2020.01)}$

(52) Cooperative Patent Classification (CPC):
**A01B 69/00; G01S 17/89; G01S 17/931;
G05D 1/43; G08G 1/16**

(86) International application number:
**PCT/JP2023/033696**

(87) International publication number:
**WO 2024/135019 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.12.2022 JP 2022203999**

(71) Applicant: Kubota Corporation
Osaka 556-8601 (JP)

(72) Inventors:
• **HAYASHIDA, Shogo**
**Sakai-shi, Osaka 590-0908 (JP)**
• **KINOSHITA, Tomohiro**
**Sakai-shi, Osaka 590-0908 (JP)**
• **KURODA, Koichi**
**Sakai-shi, Osaka 590-0908 (JP)**

(74) Representative: **Müller-Boré & Partner
Patentanwälte PartG mbB
Friedenheimer Brücke 21
80639 München (DE)**

(54) **STATE ESTIMATION SYSTEM AND AGRICULTURE MACHINE**

(57) A state estimation system of the present invention includes a sensor configured to scan surrounding environment including crop rows and output sensor data containing position information of an object existing in the environment; and a processing device configured to detect, based on the sensor data, adjacent crop rows located on a left side or a right side of the vehicle. The processing device is configured to execute, based on the position information of the adjacent crop rows, obtaining estimated values of curvature p of the adjacent crop rows, azimuth deviation $\varphi_r$ of the vehicle relative to a center line of the adjacent crop rows, and lateral deviation $y_{cr}$ of the vehicle relative to the center line, using a state space model estimation algorithm.

*FIG.16*

$$X = \frac{\rho}{2}Z^2 - \Phi_r Z - y_{cr} + \frac{W}{2}$$

$$X = \frac{\rho}{2}Z^2 - \Phi_r Z - y_{cr} - \frac{W}{2}$$

**Description**

**TECHNICAL FIELD**

The present disclosure relates to a state estimation system, and an agricultural machine having the state estimation system. The present disclosure also relates to a state estimation system, and a computer and a computer program to execute state estimation.

**BACKGROUND ART**

As attempts in next-generation agriculture, research and development of smart agriculture utilizing ICT (Information and Communication Technology) and IoT (Internet of Things) are under way. Research and development are also directed to the automation and unmanned use of tractors or other work vehicles to be used in fields. For example, work vehicles which travel via automatic steering by utilizing a positioning system that is capable of precise positioning, e.g., a GNSS (Global Navigation Satellite System), are coming into practical use.

On the other hand, development of movable units which autonomously move by utilizing distance sensors, e.g., LiDAR (Light Detection and Ranging) is also under way. For example, Patent Document 1 discloses an example of a work vehicle which performs self-traveling in between crop rows in a field by utilizing LiDAR.

**CITATION LIST**

**PATENT LITERATURE**

Patent Document 1: Japanese Laid-Open Patent Publication No. 2019-154379

**SUMMARY OF INVENTION**

**TECHNICAL PROBLEM**

In an environment in which trees or crops are distributed with a high density, e.g., vineyards or other orchards or forests, leaves thriving in upper portions of the trees create canopies, each of which serves as an obstacle or a multiple reflector against radio waves from a satellite. Such an environment hinders accurate positioning using a GNSS. In an environment where GNSS cannot be used, use of SLAM (Simultaneous Localization and Mapping), where localization and map generation simultaneously take place, might be possible. However, various challenges exist in the practical application of a work vehicle that uses SLAM to travel automatically in an environment with a multitude of trees. One challenge is that the distribution of tree leaves changes significantly with seasonal changes, making it impossible to continue using maps that were created in the past, for example.

**SOLUTION TO PROBLEM**

A state estimation system according to an illustrative embodiment of the present disclosure includes: a sensor attached to a vehicle configured to, when in operation, scan surrounding environment including crop rows and output sensor data containing position information of an object existing in the environment; and a processing device configured to detect, based on the sensor data, adjacent crop rows located on a left side or a right side of the vehicle among said crop rows. The processing device is configured to execute, based on the position information of the adjacent crop rows, obtaining estimated values of curvature $\rho$ of the adjacent crop rows, azimuth deviation $\varphi_r$ of the vehicle relative to a center line of the adjacent crop rows, and lateral deviation $y_{cr}$ of the vehicle relative to the center line, using a state space model estimation algorithm.

General or specific aspects of the present disclosure may be implemented using devices, systems, methods, integrated circuits, computer programs, a computer-readable storage media, or any combination thereof. The computer-readable storage media may be inclusive of volatile storage media, or non-volatile storage media. The devices may include a plurality of devices. In the case where the devices each include two or more devices, the two or more devices may be included within a single apparatus, or divided over two or more separate apparatuses.

**ADVANTAGEOUS EFFECTS OF INVENTION**

According to an embodiment of the present disclosure, it is possible to perform automatic steering of an agricultural machine among a plurality of crop rows (e.g., rows of trees) even in an orchard, a forest, or any other environment where GNSS-based positioning is difficult.

## BRIEF DESCRIPTION OF DRAWINGS

FIG. **1** is a side view schematically showing an example of an agricultural machine with an implement connected thereto.

FIG. **2** is a block diagram showing an example configuration of the agricultural machine.

FIG. **3A** is a schematic diagram of the LiDAR sensor as viewed from the side surface direction.

FIG. **3B** is a schematic diagram of the LiDAR sensor as viewed from directly above.

FIG. **4** is a block diagram showing an example configuration of the LiDAR sensor.

FIG. **5** is a diagram schematically showing an example of an environment (e.g., an orchard) in which the agricultural machine travels.

FIG. **6** is a perspective view schematically showing an example of an environment surrounding the agricultural machine.

FIG. **7** is a diagram schematically showing an example of a travel path of the agricultural machine.

FIG. **8** is a diagram for describing a travel control method for the agricultural machine in the inter-row travel mode.

FIG. **9** is a diagram schematically showing point cloud data obtained from tree rows.

FIG. **10** is a view showing an example of a method for detecting the left row and the right row of adjacent crop rows.

FIG. **11** is a view showing an example of a method for detecting the left row and the right row of adjacent crop rows according to an embodiment of the present disclosure.

FIG. **12** is a view schematically showing an example of object detection search according to an embodiment of the present disclosure.

FIG. **13** is a plan view schematically showing occupied cells (or point clouds) of the left row and the right row detected by object detection search.

FIG. **14** is a plan view schematically showing an example of a target path generated by the processing device based on the left row approximation line and the right row approximation line according to an embodiment of the present disclosure.

FIG. **15** is a flow chart showing the processing steps performed by the processing device according to an embodiment of the present disclosure.

FIG. **16** is a view for describing the state variables adopted by the state estimation system according to an embodiment of the present disclosure.

FIG. **17** is a plan view schematically showing an example of feature points (observed values) according to an embodiment of the present disclosure.

FIG. **18** shows a state equation according to an embodiment of the present disclosure.

FIG. **19** shows an observation equation according to an embodiment of the present disclosure.

FIG. **20** is a functional block diagram schematically showing an example of a state estimation system according to an embodiment of the present disclosure.

FIG. **21** is a block diagram for describing the operation of the second Kalman filter.

## DESCRIPTION OF EMBODIMENTS

(Definitions of Terms)

In the present disclosure, "agricultural machine" refers to a mobile machine that performs agricultural work in fields, forests, etc. An example of such a mobile agricultural machine is a work vehicle having a plurality of wheels as a propulsion device. At least one of the front portion and the rear portion of the work vehicle may be configured so that an implement (also referred to as a "work machine" or "work device") according to the work to be performed can be attached thereto. The act of a work vehicle traveling while performing work using an implement may be referred to as "tasked travel".

"Automatic steering" refers to the steering of a vehicle by the action of a processing device (which may function also as a controller), such as a computer, without manual operation by a driver.

"Self-driving" means controlling the travel of a vehicle by the action of a processing device without manual operation by a driver. During self-driving, not only the travel of the vehicle but also work operations (e.g., the operation of an implement) may be controlled automatically. The travel of a vehicle by self-driving is referred to as "self-traveling". The processing device can control at least one of the steering, travel speed adjustment, and start and stop of travel necessary for the travel of the vehicle. When controlling a work vehicle equipped with an implement, the processing device may control operations such as raising and lowering the implement and starting and stopping the operation of the implement.

Travel by self-driving may include not only travel in which the vehicle travels toward a destination along a predetermined path, but also travel in which the vehicle follows a target. A vehicle performing self-driving may travel partly based on user instructions. In addition to the self-driving mode, a vehicle performing self-driving may also operate in manual driving mode, in which the vehicle is driven by manual operation by a driver. Part or all of the processing device may be located outside the vehicle. Communication such as control signals, commands, or data may be performed between the processing device located outside the vehicle and the vehicle. A vehicle that performs self-driving may travel autonomously while sensing the surrounding environment without human involvement in the control of the travel of the vehicle. A vehicle capable of autonomous travel can travel unmanned. During autonomous travel, obstacle detection and obstacle avoidance may be performed.

Sensors mounted on an agricultural machine include "exterior sensors" and "interior sensors". "Exterior sensors" are sensors that sense the environment surrounding the agricultural machine. Examples of exterior sensors include LiDAR sensors, cameras (or image sensors), laser range finders (also referred to as "range sensors"), ultrasonic sensors, millimeter wave radars, and magnetic sensors. "Interior sensors" are sensors that sense the state of the vehicle and include speed sensors and orientation sensors such as gyroscopes.

The "crop row detection system" and "state estimation system" in the present disclosure include sensors attached to a vehicle of an agricultural machine, which sensors scan the surrounding environment including crop rows during operation and output sensor data including position information of objects existing in the environment. The position information included in the sensor data may include information indicating the distance from the sensor to the object and the direction of the object from the sensor.

A "crop row" is a row of agricultural items, trees, or other plants that may grow in rows on a field, e.g., an orchard or an agricultural field, or in a forest or the like. The term "crop rows" in the present disclosure is a notion that encompasses "tree rows" and "ridges". Even a "ridge" in a state where no crops are present is included in the term "crop row" in the present disclosure.

A "map" is local map data in which the position or area of an object around an agricultural machine is expressed in a predetermined coordinate system. A coordinate system defining a map may be a vehicle coordinate system that is fixed to the agricultural machine, or a world coordinate system that is fixed to the globe (e.g., a geographic coordinate system), for example. A map may include information other than position of an object around the agricultural machine (e.g., attribute information such as height and reflectance). The map may be expressed in various formats, e.g., an occupancy grid map or a point cloud map. Such a map may be referred to as an "obstacle map".

(Embodiments)

An embodiment of the present disclosure will now be described. Note however that unnecessarily detailed descriptions may be omitted. For example, detailed descriptions on what is well known in the art or redundant descriptions on what is substantially the same configuration may be omitted. This is to avoid lengthy description, and facilitate the understanding of those skilled in the art. Note that the accompanying drawings and the following description, which are provided by the present inventors so that those skilled in the art can sufficiently understand the present disclosure, are not intended to limit the scope of claims. In the following description, component elements having identical or similar functions are denoted by identical reference numerals.

The following embodiments are exemplary, and the technique of the present disclosure is not limited to the following embodiments. For example, numerical values, shapes, materials, steps, orders of steps, etc., that are indicated in the following embodiments are only exemplary, and admit of various modifications so long as it makes technological sense. Any implementation may be combined with another.

Hereinafter, as one example, an embodiment where an agricultural machine is a tractor used for use in agricultural work in a field such as an orchard will be described. Without being limited to tractors, the technique of the present disclosure is also applicable to other type of agricultural machines such as a combine, a vehicle for crop management, and a riding lawn mower.

[1. Configuration]

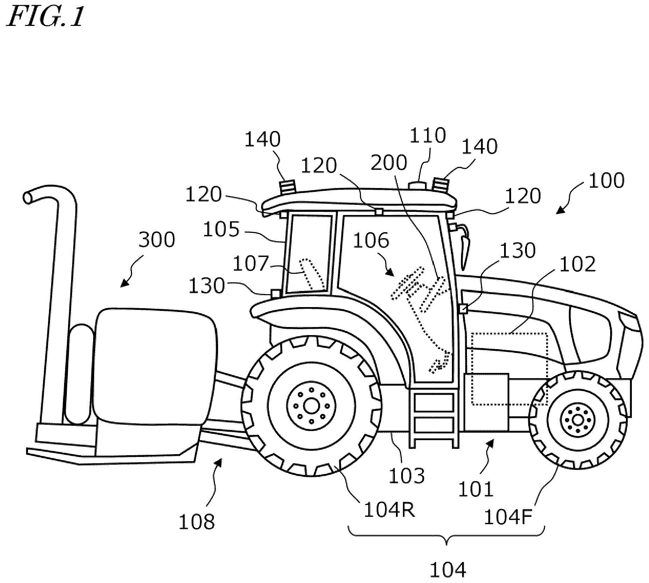

FIG. 1 is a side view schematically showing an example of an agricultural machine 100 and an example of an implement 300 linked to the agricultural machine **100.** The agricultural machine **100** according to the present embodiment can operate both in a manual driving mode and a self-driving mode. In the self-driving mode, the agricultural machine **100** is able to perform unmanned travel. The agricultural machine **100** performs self-driving in an environment where a plurality of crop rows (e.g., rows of trees) are planted, e.g., an orchard such as a vineyard or an agricultural field.

As shown in FIG. **1,** the agricultural machine **100** includes a vehicle body **101,** a prime mover (engine) **102,** and a transmission **103.** On the vehicle body **101,** running gear, which includes wheels **104** with tires, and a cabin **105** are provided. The running gear includes four wheels **104,** and axles to cause the four wheels to rotate, and brakes to brake on each axle. The wheels **104** include a pair of front wheels **104F** and a pair of rear wheels **104R.** Inside the cabin **105,** a driver's seat **107,** a steering device **106,** an operational terminal **200,** and switches for manipulation are provided. The front wheels **104F** and/or the rear wheels **104R** may be replaced by a plurality of wheels with a track (crawlers); rather than wheels with tires, attached thereto.

The agricultural machine **100** includes a plurality of exterior sensors to sense the surroundings of the agricultural machine **100.** In the example of FIG. 1, the exterior sensors include a plurality of LiDAR sensors **140,** a plurality of cameras **120,** and a plurality of obstacle sensors **130.**

The cameras **120** may be provided at the front/rear/right/left of the agricultural machine **100,** for example. The cameras **120** image the surrounding environment of the agricultural machine **100** and generate image data. The images acquired with the cameras **120** may be transmitted to the terminal device, which is responsible for remote monitoring, for example. The images may be used to monitor the agricultural machine **100** during unmanned driving. The cameras **120** may be provided according to the needs, and any number of them may be provided.

The LiDAR sensors **140** are one example of exterior sensors that output sensor data indicating a distribution of objects located in the surrounding environment of the agricultural machine **100.** In the example of FIG. **1,** two LiDAR sensors **140** are disposed on the cabin **105,** at the front and the rear. The LiDAR sensors **140** may be provided at other positions (e.g., on a lower portion of a front face of the vehicle body **101).** While the agricultural machine **100** is traveling, each LiDAR sensor **140** repeatedly outputs sensor data representing the distances and directions of measurement points on objects existing in the surrounding environment, or three-dimensional coordinate values of such measurement points. The number of LiDAR sensors **140** is not limited to two, but may be one, or three or more.

The LiDAR sensor(s) **140** may be configured to output three-dimensional point cloud data as sensor data. In the present specification, "point cloud data" broadly means data indicating a distribution of multiple reflection points that are observed with a LiDAR sensor(s) **140.** The point cloud data may include coordinate values of each reflection point in a three-dimensional space or information indicating the distance and direction of each reflection point, for example. The point cloud data may include information of luminance of each reflection point. The LiDAR sensor(s) **140** may be configured to repeatedly output point cloud data with a predesignated cycle, for example. Thus, the exterior sensors may include one or more LiDAR sensors **140** that output point cloud data as sensor data.

The sensor data that is output from the LiDAR sensor(s) **140** is processed by a processing device that controls self-traveling of the agricultural machine **100.** During travel of the agricultural machine **100,** based on the sensor data that is output from the LiDAR sensor(s) **140,** the processing device can consecutively generate an obstacle map indicating a distribution of objects existing around the agricultural machine **100.**

The plurality of obstacle sensors **130** shown in FIG. **1** are provided at the front and the rear of the cabin **105.** The obstacle sensors **130** may be disposed at other positions. For example, one or more obstacle sensors **130** may be disposed at any position at the sides, the front, or the rear of the vehicle body **101.** The obstacle sensors **130** may include, for example, laser scanners or ultrasonic sonars. The obstacle sensors **130** may be used to detect obstacles in the surroundings during self-traveling to cause the agricultural machine **100** to halt or detour around the obstacles.

The agricultural machine **100** of the present embodiment further includes a GNSS unit **110.** GNSS is a collective term for satellite positioning systems such as the GPS (Global Positioning System), QZSS (Quasi-Zenith Satellite System, e.g., MICHIBIKI), GLONASS, Galileo, and BeiDou. A GNSS unit **110** receives satellite signals (also referred to as GNSS signals) that are transmitted from a plurality of GNSS satellites, and performs positioning based on the satellite signals. Although the GNSS unit **110** in the present embodiment is disposed above the cabin **105,** it may be disposed at any other position. The GNSS unit **110** includes: an antenna to receive signals from the GNSS satellites; and a processing circuit. The agricultural machine **100** in the present embodiment may be used in environments where multiple trees grow to make it difficult to use a GNSS, e.g., a vineyard. In such environments, the LiDAR sensor(s) **140** is mainly employed in positioning. However, in an environment where it is possible to receive GNSS signals, positioning may be performed by using the GNSS unit **110.** By combining the positioning based on the LiDAR sensor(s) **140** and the positioning based on the GNSS unit **110,** the stability or accuracy of positioning can be improved.

The GNSS unit **110** may include an inertial measurement unit (IMU). Signals from the IMU can be used to complement position data. The IMU can measure a tilt or a small motion of the agricultural machine **100.** The data acquired by the IMU can be used to complement the position data based on the satellite signals, so as to improve the performance of positioning.

The prime mover **102** may be a diesel engine, for example. Instead of a diesel engine, an electric motor may be used. The transmission **103** can change the propulsion and the moving speed of the agricultural machine **100** through a speed changing mechanism. The transmission **103** can also switch between forward travel and backward travel of the agricultural machine **100.**

The steering device **106** includes a steering wheel, a steering shaft connected to the steering wheel, and a power steering device to assist in the steering by the steering wheel. The front wheels **104F** are the steered wheels, such that changing their angle of turn (also referred to as "steering angle") can cause a change in the traveling direction of the agricultural machine **100.** The steering angle of the front wheels **104F** can be changed by manipulating the steering wheel.

The power steering device includes a hydraulic device or an electric motor to supply an assisting force for changing the steering angle of the front wheels **104F.** When automatic steering is performed, under the control of the processing device disposed in the agricultural machine **100,** the steering angle may be automatically adjusted by the power of the hydraulic device or the electric motor.

A linkage device **108** is provided at the rear of the vehicle body **101.** The linkage device **108** includes, e.g., a three-point linkage (also referred to as a "three-point link" or a "three-point hitch"), a PTO (Power Take Off) shaft, a universal joint, and a communication cable. The linkage device **108** allows the implement **300** to be attached to, or detached from, the agricultural machine **100.** The linkage device **108** is able to raise or lower the three-point link with a hydraulic device, for example, thus changing the position or attitude of the implement **300.** Moreover, motive power can be sent from the agricultural machine **100** to the implement **300** via the universal joint. While towing the implement **300,** the agricultural machine **100** allows the implement **300** to perform a predetermined task. The linkage device may be provided at the front portion of the vehicle body **101.** In that case, the implement can be connected at the front portion of the agricultural machine **100.**

Although the implement **300** shown in FIG. **1** is a sprayer to spray a chemical agent onto a crop, the implement **300** is not limited to a sprayer. For example, any arbitrary implement such as a mower, a seeder, a spreader, a rake, a baler, a harvester, a plow, a harrow, or a rotary tiller may be connected to the agricultural machine **100** for use.

The agricultural machine **100** shown in FIG. 1 can be driven by human driving; alternatively, it may only support unmanned driving. In that case, component elements which are only required for human driving, e.g., the cabin **105,** the steering device **106,** and the driver's seat **107** do not need to be provided in the agricultural machine **100.** An unmanned agricultural machine **100** can travel via autonomous travel, or by remote manipulation by a user.

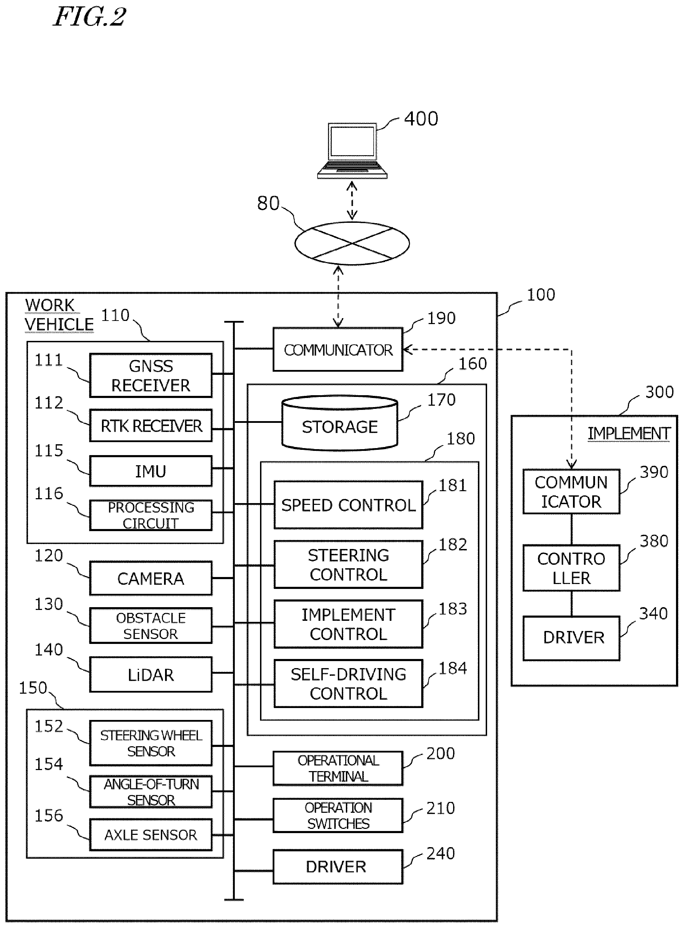

FIG. **2** is a block diagram showing an example configuration of the agricultural machine **100** and the implement **300.** The agricultural machine **100** and the implement **300** can communicate with each other via a communication cable that is included in the linkage device **108.** The agricultural machine **100** is able to communicate with a terminal device **400** for remote monitoring via a network **80.** The terminal device **400** may be any arbitrary computer, e.g., a personal computer (PC), a laptop computer, a tablet computer, or a smartphone, for example.

In addition to the GNSS unit **110,** the camera(s) **120,** the obstacle sensors **130,** the LiDAR sensor(s) **140,** and the operational terminal **200,** the agricultural machine **100** in the example of FIG. **2** includes sensors **150** to detect the operating status of the agricultural machine **100,** a travel control system **160,** a communicator **190,** operation switches **210,** and a drive device **240.** These component elements are communicably connected to one another via a bus.

The GNSS unit **110** includes a GNSS receiver **111,** an RTK receiver **112,** an inertial measurement unit (IMU) **115,** and a processing circuit **116.** The sensors **150** include a steering wheel sensor **152,** an angle-of-turn sensor **154,** and an axle sensor **156.** The travel control system **160** includes a storage **170** and a processing device **180.** The processing device **180** includes a plurality of electronic control units (ECU) **181** to **184.** The implement **300** includes a drive device **340,** a processing device **380,** and a communicator **390.** Note that FIG. **2** shows component elements which are relatively closely related to the operations of self-driving by the agricultural machine **100,** while other components are omitted from illustration.

The GNSS receiver **111** in the GNSS unit **110** receives satellite signals transmitted from the plurality of GNSS satellites and generates GNSS data based on the satellite signals. The GNSS data is generated in a predetermined format such as, for example, the NMEA-0183 format. The GNSS data may include, for example, the ID number, the angle of elevation, the azimuth angle, and a value representing the reception intensity of each of the satellites from which the satellite signals are received.

The GNSS unit **110** may perform positioning of the agricultural machine **100** by utilizing an RTK (Real Time Kinematic)-GNSS. In the positioning based on the RTK-GNSS, not only satellite signals transmitted from a plurality of GNSS satellites, but also a correction signal that is transmitted from a reference station is used. The reference station may be disposed near the work area where the agricultural machine **100** performs tasked travel (e.g., at a position within 10 km of the agricultural machine **100).** The reference station generates a correction signal of, for example, an RTCM format based on the satellite signals received from the plurality of GNSS satellites, and transmits the correction signal to the GNSS unit **110.** The RTK receiver **112,** which includes an antenna and a modem, receives the correction signal transmitted from the reference station. Based on the correction signal, the processing circuit **116** of the GNSS unit **110** corrects the results of the positioning performed by the GNSS receiver **111.** Use of the RTK-GNSS enables positioning with an accuracy on the order of several centimeters of errors, for example. Positional information including latitude, longitude, and altitude information is acquired through the highly accurate positioning by the RTK-GNSS. The GNSS unit **110** calculates the position of the agricultural machine **100** as frequently as, for example, one to ten times per second. Note that the positioning method is not limited to being performed by using an RTK-GNSS; any arbitrary positioning method (e.g., an interferometric positioning method or a relative positioning method) that provides positional information with the necessary accuracy can be used. For example, positioning may be performed by utilizing a VRS (Virtual Reference Station) or a DGPS (Differential Global Positioning System).

The GNSS unit **110** according to the present embodiment further includes the IMU **115.** The IMU **115** may include a 3-axis accelerometer and a 3-axis gyroscope. The IMU **115** may include a direction sensor such as a 3-axis geomagnetic sensor. The IMU **115** functions as a motion sensor which can output signals representing parameters such as acceleration, velocity, displacement, and attitude of the agricultural machine **100.** Based not only on the satellite signals and the correction signal but also on a signal that is output from the IMU **115,** the processing circuit **116** can estimate the position and orientation of the agricultural machine **100** with a higher accuracy. The signal that is output from the IMU **115** may be used for the correction or complementation of the position that is calculated based on the satellite signals and the correction signal. The IMU **115** outputs a signal more frequently than the GNSS receiver **111.** For example, the IMU **115** outputs a signal as frequently as approximately several ten times to several thousand times per second. Utilizing this signal that is output highly frequently, the processing circuit **116** allows the position and orientation of the agricultural machine **100** to be measured more frequently (e.g., about 10 Hz or above). Instead of the IMU **115,** a 3-axis accelerometer and a 3-axis gyroscope may be separately provided. The IMU **115** may be provided as a separate device from the GNSS unit **110.**

The cameras **120** are imagers that image the surrounding environment of the agricultural machine **100.** Each camera **120** includes an image sensor such as a CCD (Charge Coupled Device) or a CMOS (Complementary Metal Oxide Semiconductor), for example. In addition, each camera **120** may include an optical system including one or more lenses and a signal processing circuit. During travel of the agricultural machine **100,** the cameras **120** image the surrounding environment of the agricultural machine **100,** and generate image (e.g., motion picture) data. The cameras **120** are able to capture motion pictures at a frame rate of 3 frames/second (fps: frames per second) or greater, for example. The images generated by the cameras **120** may be used by a remote supervisor to check the surrounding environment of the agricultural machine **100** with the terminal device **400,** for example. The images generated by the cameras **120** may also be used for the purpose of positioning or detection of obstacles. As shown in FIG. 1, the plurality of cameras **120** may be provided at different positions on the agricultural machine **100,** or a single camera **120** may be provided. A visible camera(s) to generate visible images and an infrared camera(s) to generate infrared images may be separately provided. Both of a visible camera(s) and an infrared camera(s) may be provided as a camera(s) for generating images for monitoring purposes. The infrared camera(s) may also be used for detection of obstacles at nighttime.

An obstacle sensor **130** detects objects around the agricultural machine **100.** The obstacle sensor **130** may include a laser scanner or an ultrasonic sonar, for example. When an object exists at a position closer to the obstacle sensor **130** than a predetermined distance, the obstacle sensor **130** outputs a signal indicating the presence of an obstacle. A plurality of obstacle sensors **130** may be provided at different positions of the agricultural machine **100.** For example, a plurality of laser scanners and a plurality of ultrasonic sonars may be disposed at different positions of the agricultural machine **100.** Providing a multitude of obstacle sensors **130** can reduce blind spots in monitoring obstacles around the agricultural machine **100.**

The steering wheel sensor **152** measures the angle of rotation of the steering wheel of the agricultural machine **100.** The angle-of-turn sensor **154** measures the angle of turn of the front wheels **104F,** which are the steered wheels. Measurement values by the steering wheel sensor **152** and the angle-of-turn sensor **154** may be used for steering control by the processing device **180.**

The axle sensor **156** measures the rotational speed, i.e., the number of revolutions per unit time, of an axle that is connected to the wheels **104.** The axle sensor **156** may be a sensor including a magnetoresistive element (MR), a Hall generator, or an electromagnetic pickup, for example. The axle sensor **156** outputs a numerical value indicating the number of revolutions per minute (unit: rpm) of the axle, for example. The axle sensor **156** is used to measure the speed of the agricultural machine **100.** Measurement values from the axle sensor **156** can be utilized for the speed control by the processing device **180.**

The drive device **240** includes various types of devices required to cause the agricultural machine **100** to travel and to drive the implement **300;** for example, the prime mover **102,** the transmission **103,** the steering device **106,** the linkage device **108** and the like described above. The prime mover **102** may include an internal combustion engine such as, for example, a diesel engine. The drive device **240** may include an electric motor for traction instead of, or in addition to, the internal combustion engine.

The storage **170** includes one or more storage media such as a flash memory or a magnetic disc. The storage **170** stores various data that is generated by the GNSS unit **110,** the camera(s) **120,** the obstacle sensor(s) **130,** the LiDAR sensor(s) **140,** the sensors **150,** and the processing device **180.** The data that is stored by the storage **170** may include an environment map of the environment where the agricultural machine **100** travels, an obstacle map that is consecutively generated during travel, and path data for self-driving. The storage **170** also stores a computer program(s) to cause each of the ECUs in the processing device **180** to perform various operations described below. Such a computer program(s) may be provided to the agricultural machine **100** via a storage medium (e.g., a semiconductor memory, an optical disc, etc.) or through telecommunication lines (e.g., the Internet). Such a computer program(s) may be marketed as commercial software.

The processing device **180** includes the plurality of ECUs. The plurality of ECUs include, for example, the ECU **181** for speed control, the ECU **182** for steering control, the ECU **183** for implement control, and the ECU **184** for self-driving control that performs various calculations necessary for automatic steering or self-driving.

The ECU **181** controls the prime mover **102,** the transmission **103,** and brakes included in the drive device **240,** thus controlling the speed of the agricultural machine **100.**

The ECU **182** controls the hydraulic device or the electric motor included in the steering device **106** based on a measurement value of the steering wheel sensor **152,** thus controlling the steering of the agricultural machine **100.**

In order to cause the implement **300** to perform a desired operation, the ECU **183** controls the operations of the three-point link, the PTO shaft and the like that are included in the linkage device **108.** Also, the ECU **183** generates a signal to control the operation of the implement **300,** and transmits this signal from the communicator **190** to the implement **300.**

Based on data output from the GNSS unit **110,** the camera(s) **120,** the obstacle sensor(s) **130,** the LiDAR sensor(s) **140,** and the sensors **150,** the ECU **184** performs computation and control for automatic steering or self-driving. For example, the ECU **184** estimates the position of the agricultural machine **100** based on the data output from at least one of the GNSS unit **110,** the camera(s) **120,** and the LiDAR sensor(s) **140.** In a situation where a sufficiently high reception intensity exists for the satellite signals from the GNSS satellites, the ECU **184** may determine the position of the agricultural machine **100** based only on the data output from the GNSS unit **110.**

On the other hand, in an environment where obstructions, such as trees, that may hinder reception of the satellite signals exist around the agricultural machine **100,** e.g., an orchard, the ECU **184** estimates the position of the agricultural machine **100** by using the data output from the LiDAR sensor(s) **140.** The ECU **184** according to an embodiment of the present disclosure also functions as a "processing device" that detects the left and right crop rows (adjacent crop rows) adjacent to the agricultural machine **100** when the agricultural machine **100** travels between crop rows in an orchard, and estimates the "state" defined by the agricultural machine **100** and the adjacent crop rows. Based on the estimated "state", it is possible to acquire estimated values of the position and orientation (pose) of the agricultural machine **100** between the adjacent crop rows. This point will be described later.

During automatic steering or self-driving, the ECU **184** performs computation necessary for the agricultural machine **100** to travel along a target path, based on the estimated position of the agricultural machine **100.** The ECU **184** sends a steering angle change instruction to the ECU **182** based on the target path. The ECU **182** changes the steering angle by controlling the steering device **106** in response to the steering angle change instruction. When performing self-driving, the ECU **184** sends a speed change instruction to the ECU **181** based on the target path. The ECU **181** changes the speed of the agricultural machine **100** by controlling the prime mover **102,** the transmission **103,** or the brake in response to the speed change instruction.

Through the actions of these ECUs, the processing device **180** realizes self-traveling. During self-traveling, the processing device **180** controls the drive device **240** based on the measured or estimated position of the agricultural machine **100** and on the consecutively-generated target path. As a result, the processing device **180** can cause the agricultural machine **100** to travel along the target path. In other words, the processing device **180** functions as an automatic steering device or an self-driving device.

The plurality of ECUs included in the processing device **180** can communicate with one another in accordance with a vehicle bus standard such as, for example, a CAN (processing device Area Network). Instead of a CAN, faster communication methods such as Automotive Ethernet (registered trademark) may be used. Although the ECUs **181 to 184** are illustrated as individual blocks in FIG. **2,** the function of each of the ECU **181 to 184** may be implemented by a plurality of ECUs. Alternatively, an onboard computer that integrates the functions of at least some of the ECUs **181 to 184** may be provided. The processing device **180** may include ECUs other than the ECUs **181 to 184,** and any number of ECUs may be provided in accordance with functionality. Each ECU includes a processing circuit including one or more processors.

The communicator **190** is a device including a circuit communicating with the implement **300** and the terminal device **400.** The communicator **190** includes circuitry to perform exchanges of signals complying with an ISOBUS standard such as ISOBUS-TIM, for example, between itself and the communicator **390** of the implement **300.** This allows the implement **300** to perform a desired operation, or allows information to be acquired from the implement **300.** The communicator **190** may further include an antenna and a communication circuit to exchange signals via the network **80** with the respective communicators of the terminal device **400.** The network **80** may include a 3G, 4G, 5G, or any other cellular mobile communications network and the Internet, for example. The communicator **190** may have a function of communicating with a mobile terminal that is used by a supervisor who is situated near the agricultural machine **100.** With such a mobile terminal, communication may be performed based on any arbitrary wireless communication standard, e.g., Wi-Fi (registered trademark), 3G, 4G, 5G or any other cellular mobile communication standard, or Bluetooth (registered trademark).

The operational terminal **200** is a terminal for the user to perform a manipulation related to the travel of the agricultural machine **100** and the operation of the implement **300,** and is also referred to as a virtual terminal (VT). The operational terminal 200 may include a display device such as a touch screen panel, and/or one or more buttons. The display device may be a display such as a liquid crystal display or an organic light-emitting diode (OLED) display, for example. By manipulating the operational terminal **200,** the user can perform various manipulations, such as, for example, switching ON/OFF the self-driving mode, and switching ON/OFF the implement **300.** At least a part of these manipulations may also be realized by manipulating the operation switches **210.** The operational terminal **200** may be configured so as to be detachable from the agricultural machine **100.** A user who is at a remote place from the agricultural machine **100** may manipulate the detached operational terminal **200** to control the operation of the agricultural machine **100.**

The drive device **340** in the implement **300** shown in FIG. **2** performs operations necessary for the implement **300** to perform predetermined work. The drive device **340** includes a device suitable for uses of the implement **300,** for example, a hydraulic device, an electric motor, a pump or the like. The processing device **380** controls the operation of the drive device **340.** In response to a signal that is transmitted from the agricultural machine **100** via the communicator **390,** the processing device **380** causes the drive device **340** to perform various operations. Moreover, a signal that is in accordance with the state of the implement **300** can be transmitted from the communicator **390** to the agricultural machine **100.**

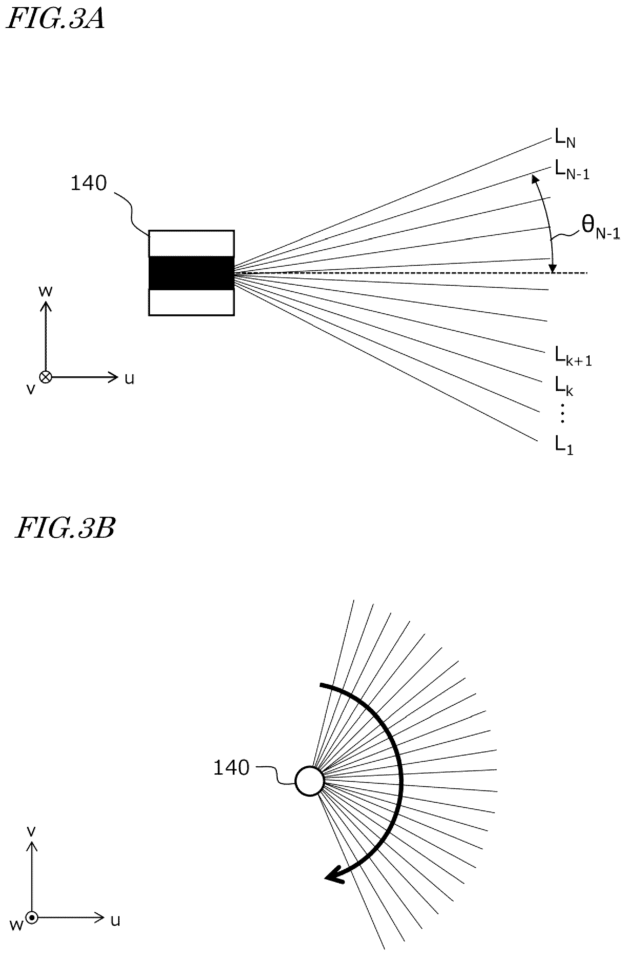

Next, with reference to FIG. **3A** and FIG. **3B,** an example configuration of the LiDAR sensor **140** will be described. The LiDAR sensor **140** in the present embodiment is a scan-type sensor capable of acquiring information on the distance distribution of objects within a space by laser beam scanning. FIG. **3A** is a schematic diagram of the LiDAR sensor **140** as viewed in a lateral direction of the agricultural machine **100.** FIG. **3B** is a schematic diagram of the LiDAR sensor **140** as viewed from vertically above. In FIG. **3A** and FIG. **3B** are shown three axes u, v and w in a sensor coordinate system that is fixed to the LiDAR sensor **140,** which are orthogonal to one another. In FIG. **3A** and FIG. **3B,** straight lines extending radially schematically represent the center axes (or traveling directions) of laser beams emitted from the LiDAR sensor **140.** Although each laser beam is collimated into parallel light, it has an angle of spread of several milliradians (e.g., 0.1 to 0.2 degrees). Therefore, the cross-sectional size (spot diameter) of each laser beam increases in proportion to distance from the LiDAR sensor **140.** For example, a light spot with a diameter of several centimeters may be formed 20 meters away from the LiDAR sensor **140.** In the figure, for simplicity, the spread of each laser beam is ignored, and only the center axis of the laser beam is illustrated.

The LiDAR sensor **140** in the example shown in FIG. **3A** can scan the laser beams in different outgoing directions, for example, by using MEMS mirrors. The elevation angle of a laser beam is defined by the angle relative to the uv plane. FIG. **3A** schematically shows the directions of the laser beams $L_1$, ..., $L_N$ corresponding to N scanning lines. Here, "N" is an integer of 1 or more, and may be 64 or 100 or more, for example. Among the multiple scanning directions N, the elevation angle of the $k_{th}$ scanning direction from the bottom is denoted as $\theta_k$. FIG. **3A** shows, as an example, the elevation angle $\theta_{N-1}$ of the N-1$^{th}$ laser beam. The elevation angle of the laser beam directed upward relative to the uv plane is referred to as the "positive elevation angle", and the elevation angle of the laser beam directed downward relative to the uv plane is referred to as the "negative elevation angle".

The angle between the first scanning direction and the N$^{th}$ scanning direction is referred to as the "vertical field of view angle". The vertical field of view angle may be set within a range of about 0° to 60°, for example.

As shown in FIG. **3B,** the LiDAR sensor **140** can perform scanning by changing the outgoing direction (e.g., azimuth angles) of the laser beam. FIG. **3B** shows the outgoing directions of laser beams as rotating around a rotation axis that is parallel to the w axis. The range of the outgoing directions (azimuth angles) of the laser beams may be 360°, or an angle range that is smaller than 360° (e.g., 120° or 270°). The range of azimuth angles of the outgoing directions of laser beams is referred to as the "horizontal viewing angle". The horizontal viewing angle may be set in a range from about 90° to 360°, for example. While rotating the outgoing directions of laser beams around a rotation axis that is parallel to the w axis, the LiDAR sensor **140** successively emits pulsed laser light (laser pulses) in directions of different azimuth angles. Thus, with pulsed laser light emitted at different angles of elevation and different azimuth angles, it is possible to measure the distance to each reflection point. Each reflection point corresponds to each individual point included in the point cloud data. The operation of measuring the distance to a reflection point while scanning a range defined by the vertical field of view angle and the horizontal field of view angle is referred to as one scan. For the sensor data obtained in one scan, the LiDAR sensor **140** repeats the scanning operation at a frequency of approximately 1 to 20 times per second, for example. During one scan, for example, 100,000 or more pulses of laser light may be emitted in different directions.

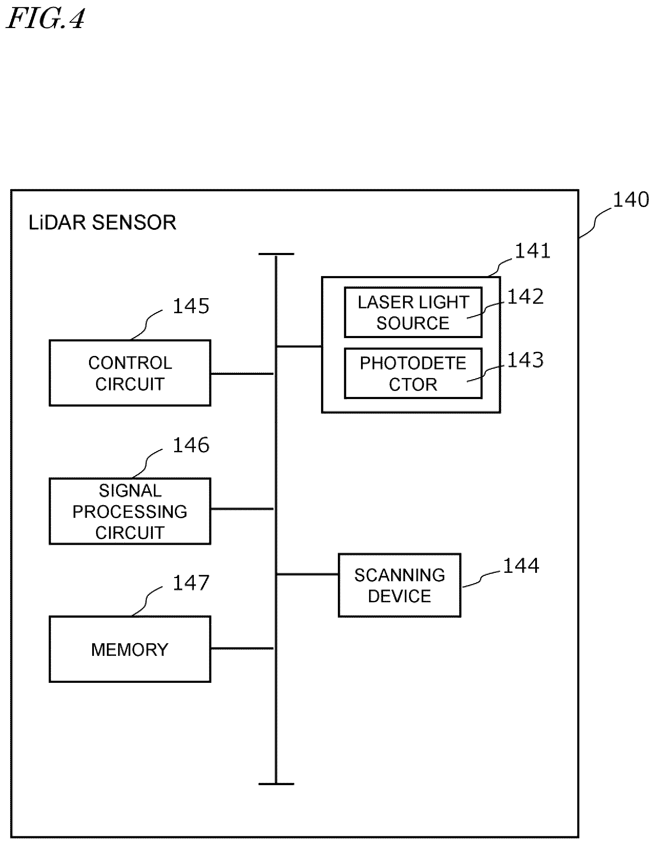

FIG. 4 is a block diagram showing an example schematic configuration of the LiDAR sensor 140. The LiDAR sensor **140** shown in FIG. 4 includes one or more laser units **141,** a scanning device **144,** a control circuit **145,** a signal processing circuit **146,** and a memory **147.** The laser unit **141** includes a laser light source **142** and a photodetector **143.** Each laser unit **141** may include optics such as a lens(es) and a mirror(s), but they are omitted from illustration. By rotating a mirror that is placed on the optical path of a laser beam emitted from each laser light source **142,** for example, the scanning device **144** changes the direction of the laser beam emitted from the respective laser light source **142.**

Each laser light source **142** includes a laser diode, and emits a pulsed laser beam of a predetermined wavelength in response to a command from the control circuit **145.** The wavelength of the laser beam may be a wavelength that is included in the near-infrared wavelength region (approximately 700 nm to 2.5 $\mu$m), for example. The wavelength used depends on the material of the photoelectric conversion element used for the photodetector **143.** In the case where silicon (Si) is used as the material of the photoelectric conversion element, for example, a wavelength around 900 nm may be mainly used. In the case where indium gallium arsenide (InGaAs) is used as the material of the photoelectric conversion element, a wavelength of not less than 1000 nm and not more than 1650 nm may be used, for example. Note that the wavelength of the laser beam is not limited to the near-infrared wavelength region. In applications where influences of ambient light are not a problem (e.g., for nighttime use), a wavelength included in the visible region (approximately 400 nm to 700 nm) may be used. Depending on the application, the ultraviolet wavelength region may also be used. In the present specification, any radiation in the ultraviolet, visible light, and infrared wavelength regions in general is referred to as "light".

Each photodetector **143** is a device to detect laser pulses that are emitted from the laser light source **142** and reflected or scattered by an object. The photodetector **143** includes a photoelectric conversion element such as an avalanche photodiode (APD), for example. The photodetector **143** outputs an electrical signal which is in accordance with the amount of received light.

In response to an instruction from the control circuit **145,** the scanning device **144** rotates or swings the mirror that is placed on the optical path of a laser beam emitted from each laser light source **142.** This realizes a scan operation that changes the outgoing directions of laser beams.

The control circuit **145** controls emission of laser pulses by the laser light sources **142,** detection of reflection pulses by the photodetectors **143,** and rotational operation by the scanning device **144.** The control circuit **145** can be implemented by a circuit that includes a processor, e.g., a microcontroller unit (MCU), for example.

The signal processing circuit **146** is a circuit to perform computations based on signals that are output from the photodetectors **143.** The signal processing circuit **146** uses a ToF (Time of Flight) techniques to calculate a distance to an object that has reflected a laser pulse emitted from a laser light source **142,** for example. ToF techniques include direct ToF and indirect ToF. Under direct ToF, the time from the emission of a laser pulse from the laser light source **142** until reflected light is received by the photodetector **143** is directly measured to calculate the distance to the reflection point. Under indirect ToF, a plurality of exposure periods are set in the photodetector **143,** and the distance to each reflection point is calculated based on a ratio of light amounts detected in the respective exposure periods. Either the direct ToF or indirect ToF method may be used. The signal processing circuit **146** generates and outputs sensor data indicating the distance to each reflection point and the direction of that reflection point, for example. Furthermore, the signal processing circuit **146** calculates coordinates (u,v) or (u,v,w) in the sensor coordinate system based on the distance to each reflection point and the direction of that reflection point, and include these in the sensor data for output.

Although the control circuit **145** and the signal processing circuit **146** are two separate circuits in the example of FIG. **4,** they may be implemented as a single circuit.

The memory **147** is a storage medium to store data that is generated by the control circuit **145** and the signal processing circuit **146.** For example, the memory **147** stores data that associates the emission timing of a laser pulse emitted from each laser unit **141,** the outgoing direction, the reflected light intensity, the distance to the reflection point, and the coordinates (u,v) or (u,v,w) in the sensor coordinate system. Such data is generated each time a laser pulse is emitted, and recorded to the memory **147.** The control circuit **145** outputs such data with a predetermined cycle (e.g., the length of time required to emit a predetermined number of pulses, a half scan period, or one scan period). The output data is recorded in the storage **170** of the agricultural machine **100.**

The LiDAR sensor **140** outputs sensor data with a frequency of about 1 to 20 times per second, for example. This sensor data may include the coordinates of multiple points expressed by the sensor coordinate system, and time stamp information. The sensor data may include the information of distance and direction toward each reflection point but not include coordinate information. In such cases, the processing device **180** performs conversion from the distance and direction information into coordinate information.

Note that the method of distance measurement is not limited to the ToF techniques, but other methods such as the FMCW (Frequency Modulated Continuous Wave) techniques may also be used. In the FMCW techniques, light whose frequency is linearly changed is emitted, and distance is calculated based on the frequency of beats that occur due to interferences between the emitted light and the reflected light.

As described above, the LiDAR sensor(s) **140** according to the present embodiment may be scan-type sensors, which acquire information on the distance distribution of objects in the surrounding environment by scanning a laser beam. However, the LiDAR sensors **140** are not limited to scan-type sensors. For example, the LiDAR sensor(s) **140** may be flash-type sensors, which acquire information on the distance distribution of objects in space by using light diffused over a wide area. A scan-type LiDAR sensor uses a higher intensity light than does a flash-type LiDAR sensor, and thus can acquire distance information at a greater distance. On the other hand, flash-type LiDAR sensors are suitable for applications that do not require intense light because they are simple in structure and can be manufactured at low cost.

[2. Operation]

Next, an operation of the agricultural machine **100** will be described.

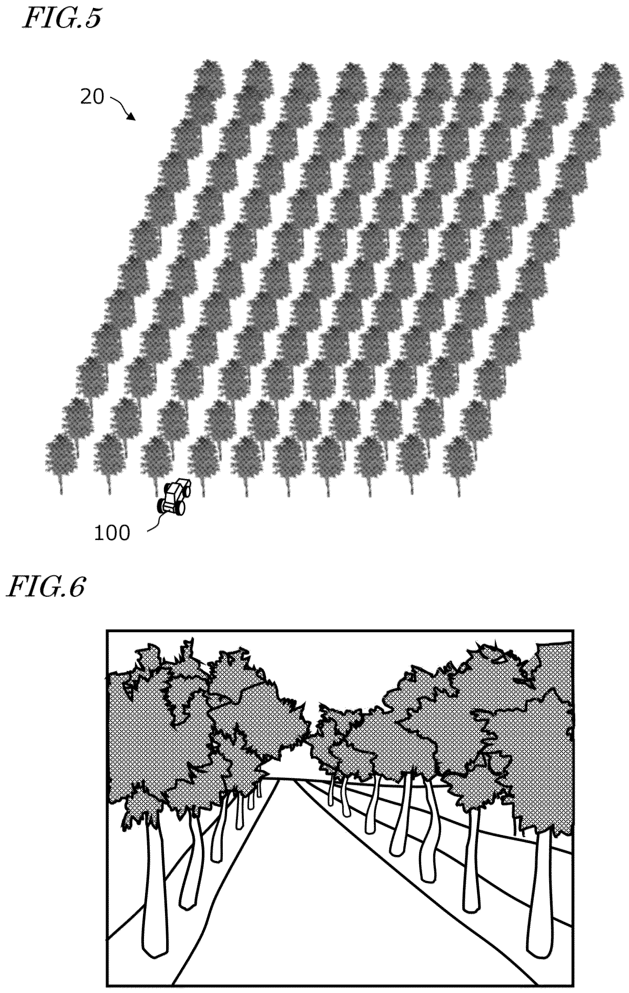

FIG. **5** is a diagram schematically showing an example of an environment in which the agricultural machine **100** travels. FIG. **6** is a perspective view schematically showing an example of the surrounding environment of the agricultural machine **100.** In this example, while traveling between rows of trees **20** (i.e., crop rows) in an orchard such as a vineyard, the agricultural machine **100** uses the implement **300** to perform predetermined tasks (e.g., spreading chemical agents, mowing, preventive pest control, or the like). The sky over an orchard is obstructed by branches and leaves, thus hindering self-traveling using a GNSS. In an environment where a GNSS cannot be used, it may be conceivable to travel while performing localization through matching between an environment map that is created in advance and the sensor data. However, in a field such as an orchard, the outer shapes of the leaves of trees or other crops or hedges may change significantly with seasons, thus making it difficult to continue using an environment map that is created in advance. Moreover, in a conventional self-driving agricultural machine, information such as positions of crop rows, shape of the field, and positions of headland areas is set in advance, and a path for self-traveling is generated based on such information. In a vast field, however, it is considerable work to set the positions of crop rows in advance.

Therefore, the processing device **180** according to the present embodiment detects two crop rows (adjacent crop rows) existing on opposite sides of the agricultural machine **100** based on sensor data that is output from the LiDAR sensor(s) **140,** and causes the agricultural machine **100** to travel along a path between the two crop rows.

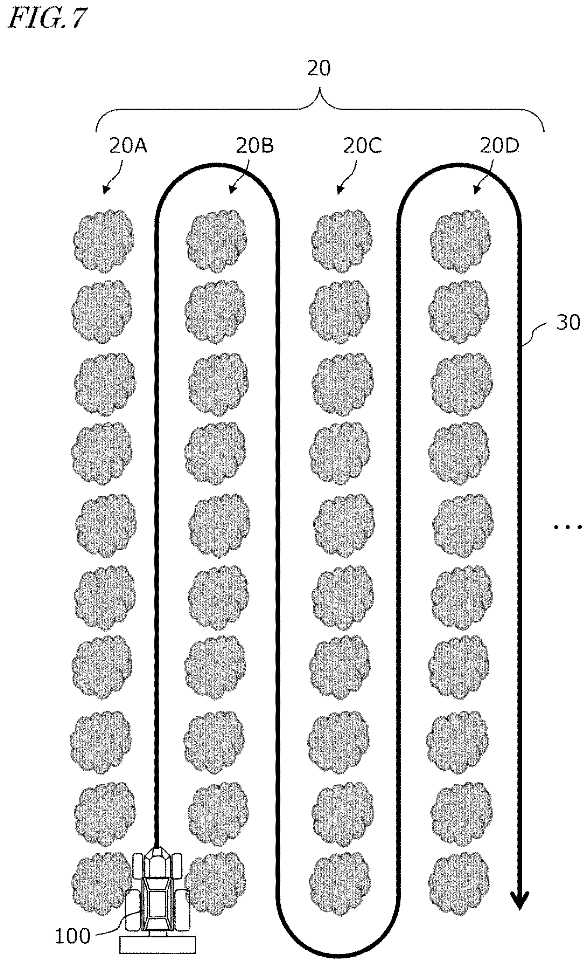

FIG. 7 is a diagram showing schematically an example of a travel path **30** of the agricultural machine **100.** The agricultural machine **100** travels between the tree rows **20** along the path **30** as illustrated. Although FIG. 7 illustrates any line segment included in the path **30** to be a straight line, the path along which the agricultural machine **100** actually travels may include curved portions or winding portions. Now, the plurality of tree rows **20** are sequentially designated as a first tree row **20A,** a second tree row **20B,** a third tree row **20C,** a fourth tree row **20D,** etc., from the end. In the example of FIG. **7,** the agricultural machine **100** first travels between the first tree row **20A** and the second tree row **20B,** and upon completing this travel, turns right to travel between the second tree row **20B** and the third tree row **20C** in the opposite direction. Once the travel between the second tree row **20B** and the third tree row **20C** is completed, it further turns left to travel between the third tree row **20C** and the fourth tree row **20D.** Thereafter, by repeating a similar operation, it travels to the final end of the path **30,** which will be in between the last two tree rows.

The agricultural machine **100** in the present embodiment can travel between adjacent tree rows by automatic steering based on sensor data output from the LiDAR sensor **140.** In the present disclosure, this mode of traveling between adjacent crop rows by automatic steering is referred to as "inter-row travel mode".

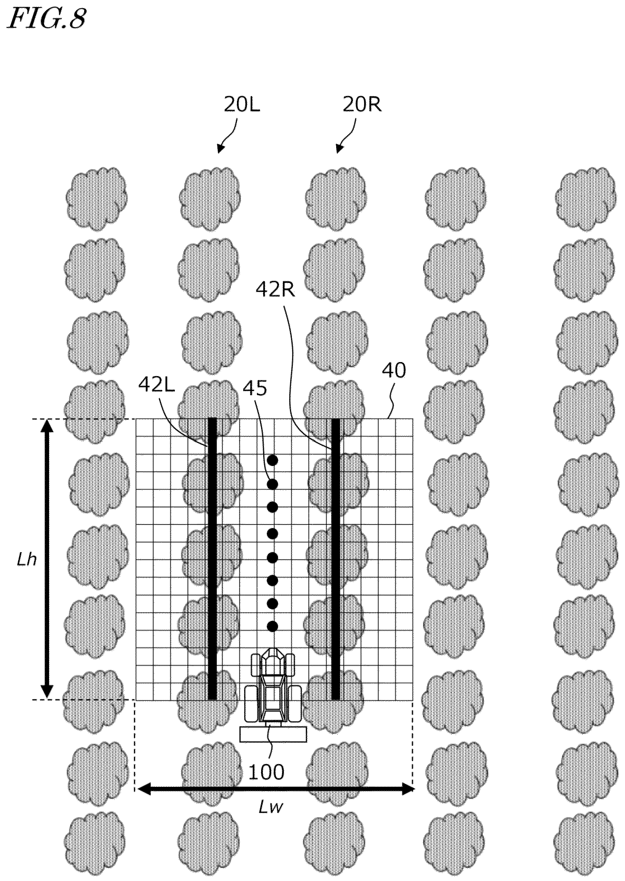

FIG. 8 is a diagram for describing a travel control method for the agricultural machine in the inter-row travel mode. The agricultural machine **100** scans the surrounding environment with a laser beam using the LiDAR sensor **140** while traveling between two adjacent tree rows, i.e., the left row **20L** and the right row **20R.** This allows data indicating the distribution of distances and orientations to objects existing in the environment to be acquired. Such data is converted into, for example, two-dimensional or three-dimensional point cloud data and output as sensor data.

While the agricultural machine **100** is traveling, the processing device **180** consecutively generates an obstacle map **40** based on the sensor data output from the LiDAR sensor **140.** The obstacle map **40** indicates, for example, the distribution of objects in a vehicle coordinate system fixed to the agricultural machine **100.** The obstacle map **40** in the example of FIG. **8** has a predetermined length **Lh** and width **Lw.** The length **Lh** is the size in the longitudinal direction corresponding to the direction of travel of the agricultural machine **100.** The width **Lw** is the size in the lateral direction perpendicular to both the direction of travel of the agricultural machine **100** and the vertical direction.

In the example shown in FIG. **8,** the processing device **180** detects the left row **20L** and the right row **20R** included in two tree rows (adjacent tree rows) existing on opposite sides of the agricultural machine **100** based on the obstacle map **40.** The specific method will be described later. In the example shown in FIG. **8,** the processing device **180** finds approximate lines **42R** and **42L** of the left row **20L** and the right row **20R** of the tree rows extending in a straight line based on the obstacle map **40.** The processing device **180** can set a target path **45** between the approximate lines **42R** and **42L** (e.g., in the center). Note that if multiple trees in the left row **20L** and the right row **20R** of the tree rows are distributed in a curved pattern, the processing device **180** can find curved approximate lines instead of straight lines and set the target path **45** between those approximate lines.

The target path **45** can be set within a relatively short range (e.g., a range of several meters) starting from the position of the agricultural machine **100.** The target path **45** can be defined by, for example, a plurality of waypoints. Each waypoint can include information on the position and direction (or speed) of a location to be passed by the agricultural machine **100.** The interval between waypoints may be set to a value such as tens of centimeters (cm) to several meters (m), for example. The processing device **180** causes the agricultural machine **100** to travel along the set target path **45.** For example, the processing device **180** performs steering control of the agricultural machine **100** so as to minimize the deviation of the position and direction of the agricultural machine **100** with respect to the target path **45.** This allows the agricultural machine **100** to travel along the target path **45.**

Point cloud data reflecting the complex shapes of trees can be obtained from actual tree rows. Trees are not necessarily arranged in a straight line as shown in FIG. **8,** and a tree row may include a curved portion.

<Crop row detection>

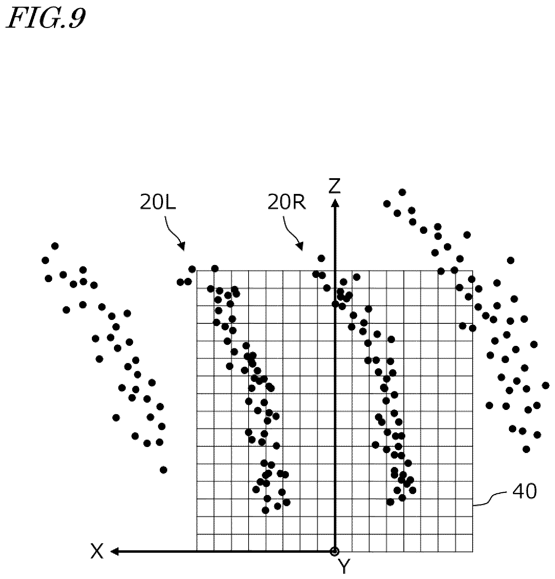

FIG. **9** is a plan view schematically showing point cloud data obtained from tree rows extending non-linearly. The black dots in the figure schematically indicate reflection points of laser beams located on the surfaces of objects such as tree trunks, branches, leaves, and fruits. The point cloud composed of such reflection points may vary complexly due to the growth of tree branches and leaves. FIG. **9** shows an XYZ coordinate system (Cartesian coordinate system) for specifying the position information of reflection points in the obstacle map **40.** The position of each point (reflection point) constituting the three-dimensional point cloud data is expressed by coordinates (X, Y, Z) in an XYZ coordinate system. An example of an XYZ coordinate system is a vehicle coordinate system fixed to the agricultural machine 100. The origin of such a vehicle coordinate system may be located, for example, at the center of the rear axle of the agricultural machine 100. FIG. 9 is a two-dimensional point cloud obtained by projecting a three-dimensional point cloud perpendicularly onto the XZ plane, which corresponds to a bird's-eye view of the tree rows looking straight down from above.

The LiDAR sensor **140** can output sensor data at a predetermined cycle. For example, when point cloud data such as that shown in FIG. 9 is defined as one frame, the LiDAR sensor **140** can obtain multiple frames of point cloud data per second (e.g., 10 frames per second). In this case, for example, a single obstacle map **40** may be created from point cloud data of one frame, or a single obstacle map **40** may be created by superimposing point cloud data of multiple frames. The position and orientation of the LiDAR sensor **140** mounted on the agricultural machine **100** change while the agricultural machine **100** is traveling and while the LiDAR sensor **140** outputs point cloud data of multiple frames. For this reason, when creating a single obstacle map **40** from point cloud data of multiple frames, the point cloud of multiple frames may be superimposed (registered) so that they match.

The following describes an example of how the processing device **180** of the present embodiment detects the left row **20L** and right row **20R** of adjacent tree rows using the obstacle map **40**.

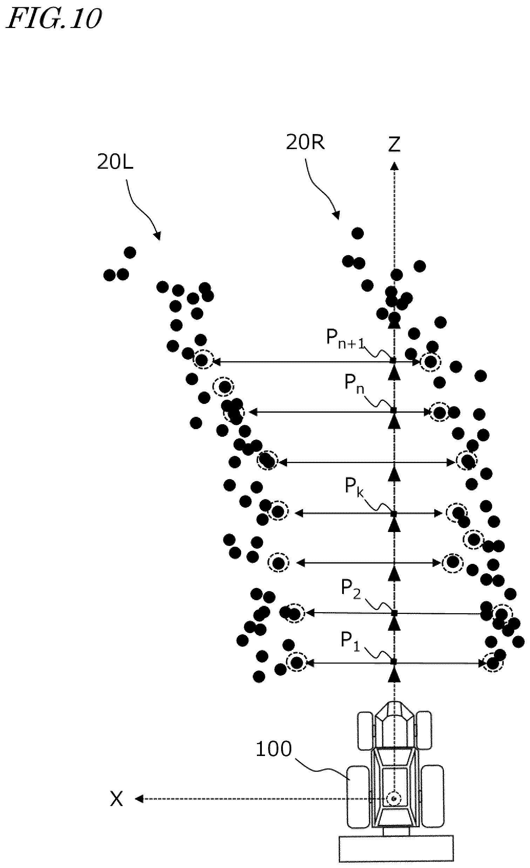

First, reference is made to FIG. **10.** In this example, the processing device **180** performs an operation to detect the left row **20L** and the right row **20R** of adjacent crop rows using the coordinates (position information) of the point cloud in a vehicle coordinate system fixed to the vehicle of the agricultural machine **100.** The vehicle coordinate system is a coordinate system (XZ coordinate system) that defines a coordinate plane (XZ plane) including, for example, a first coordinate axis (Z axis) extending in the front-rear direction of the vehicle from the origin and a second coordinate axis (X axis) extending in the left-right direction of the vehicle from the origin. The origin is placed, for example, at the center of the rear axle of the agricultural machine **100.**

The position information of the point cloud obtained from three-dimensional LiDAR sensors is originally expressed in three-dimensional coordinates. Therefore, the coordinates (Y-coordinate: height information) in the third coordinate axis (Y-axis) perpendicular to the XZ plane can be recorded in a three-dimensional obstacle map, along with the X-coordinate and Z-coordinate. The map in FIG. **10** can be formed based on a point cloud that is obtained by perpendicular projection of a point cloud existing within a predetermined height range onto the XZ plane. The height of the point cloud that is effective for detecting the presence of trees is determined based on the height of the trees. For a certain type of trees, if the height of the branches and leaves that affect the travel of the agricultural machine **100** is, for example, 0.3 to 1.5 meters above the ground, it is efficient to create a two-dimensional obstacle map **40** from a point cloud whose height is in the range of 0.3 to 1.5 meters above the ground. In other words, an obstacle map **40** can be created from a two-dimensional point cloud obtained by perpendicular projection of the point cloud with a height from the ground within a predetermined range onto the XZ plane.

The obstacle map **40** may be a three-dimensional occupancy grid map composed of three-dimensional cells (voxels) having a side length in the range of 1 to 20 centimeters, for example. A cell containing the point cloud with a density greater than a predetermined value is an "occupied cell" indicating that an object (a tree) exists in the cell. A cell where the density of point cloud is less than the predetermined value is an "unoccupied cell (a free space cell)" indicating that no objects are presumed to exist in the cell, or an "unknown space cell" where the probability of the existence of objects cannot be determined. The three-dimensional occupancy grid map may be converted into a two-dimensional occupancy grid map (a flat map corresponding to a bird's-eye view) on the XZ coordinate plane. An occupied cell on a two-dimensional occupancy grid map may be a cell in which in which a point cloud exists within a predetermined height range. By limiting the predetermined height range to, for example, 0.3 to 1.5 meters, it is possible to identify a spatial area where tree branches and leaves exist.

Each cell on the two-dimensional occupancy grid map may have various information that can be used for object detection, classification, segmentation, etc. For example, height information, reflectance information, point cloud density information, etc., of objects detected by the LiDAR sensors may be recorded on a cell-by-cell basis.

The processing device **180** uses a map (obstacle map) based on the position information of the point cloud to start an object detection search parallel to the X-axis, which is the second coordinate axis, from the first coordinate point in the XZ coordinate system to detect the left crop row **20L** and the right crop row **20R** of adjacent crop rows.

In the example of FIG. **10,** the processing device **180** sets the first coordinate points $P_1$, $P_2$, ..., $P_k$, ..., $P_n$, $P_{n+1}$, which are arranged at predetermined intervals on the Z-axis, as the starting points for starting the object detection search. Here, n is an integer of 1 or more, and k is an integer of 1 or more and n or less. Hereinafter, the first coordinate points $P_1$, $P_2$, ..., $P_k$, ..., $P_n$, $P_{n+1}$, may be referred to collectively as "the first coordinate point P" for the sake of simplicity.

In the example of FIG. **10,** starting from each of the first coordinate points $P_1$, $P_2$, ..., $P_k$, ..., $P_n$, $P_{n+1}$, search for the presence or absence of the point cloud or occupied cells corresponding to tree rows to the left and right of each point. For example, when using an occupancy grid map, the processing device **180** searches for occupied cells by sequentially searching for multiple cells arranged on a straight line to the right or left of the cell located at the first coordinate point P (starting point cell). In FIG. **10,** the detected occupied cells are enclosed by broken line circles.

However, according to the object detection search in this example, the object detection search may stop after passing through the left row **20L** or the right row **20R** of adjacent crop rows. For example, as shown in FIG. **10,** when the right row **20R** curves to the left, the first coordinate point $P_{n+1}$ enters the point cloud of the right row **20R**. In that case, it becomes difficult to determine the distance from the first coordinate point $P_{n+1}$ to the right row **20R.**

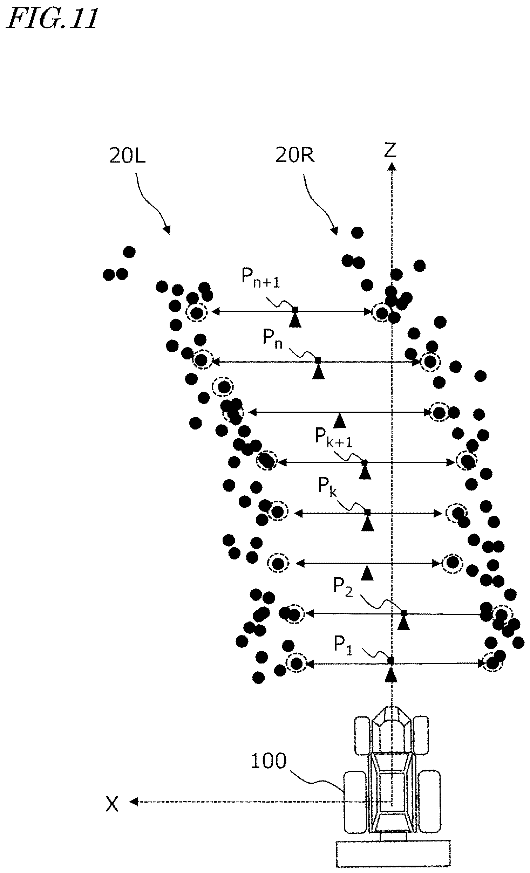

In the embodiment of the present disclosure, in order to solve such a problem, scanning is performed in the horizontal direction while moving the scanning starting point along the tree rows. That is, as shown in FIG. **11,** the processing device **180** of the present embodiment changes (updates) the position of the first coordinate point $P_k$ in accordance with the increase in k. Specifically, when updating the first coordinate point $P_k$ to the first coordinate point $P_{k+1}$, the processing device **180** increases the first coordinate (Z coordinate) of the first coordinate axis (Z axis) of the first coordinate point $P_{k+1}$ relative to the first coordinate (Z coordinate) of the first coordinate axis (Z axis) of the first coordinate point $P_k$, and aligns the X coordinate (second coordinate) of the first coordinate point $P_{k+1}$ with the X coordinate of the crop row center point where the distances to the left crop row **20L** and right crop row **20R** are equal. When using an occupancy grid map, the distance (Z shift amount) in the Z axis direction between the first coordinate point $P_k$ and the first coordinate point $P_{k+1}$ can be equal to, for example, an integer multiple of the size in the Z axis direction of one cell.

According to this method, even when the tree rows (the left row **20L** and the right row **20R)** are curved as shown in FIG. **11,** the X-coordinate of the first coordinate point P can be appropriately shifted according to the curve. As a result, it becomes easy to detect the left row and the right row from the first coordinate point P. This method is also applicable when one of the left row **20L** and the right row **20R** of the tree rows is curved, or when the direction, position, or degree of curvature of the left row and the right row are different.

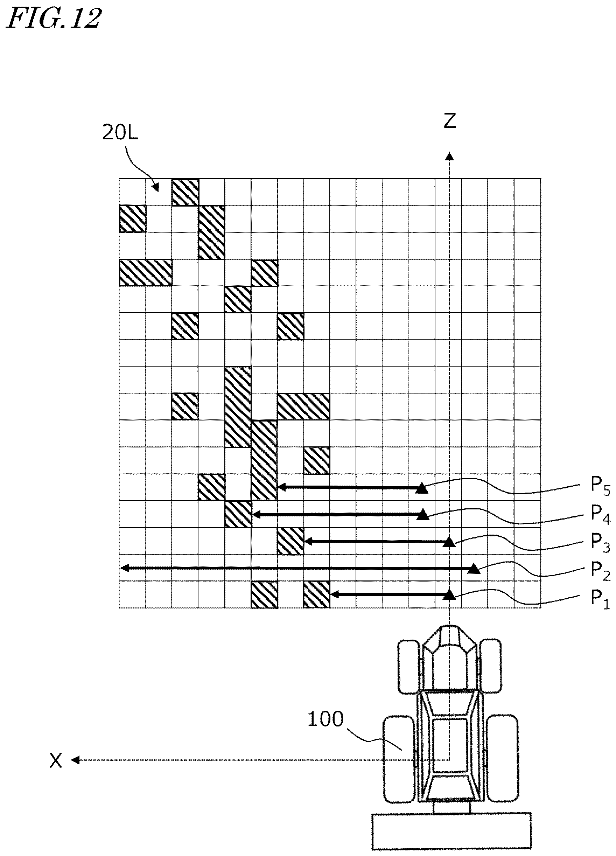

FIG. **12** is a view schematically showing an example of object detection search using an occupancy grid map. In this example, a search is performed to the left from the first coordinate points $P_1$, $P_2$, $P_3$, $P_4$, and $P_5$. In this example, the initial first coordinate point $P_1$ is placed on the Z-axis. In an occupancy grid map (obstacle map) in which multiple cells are arranged in two dimensions in rows and columns, the cells hatched with diagonal lines are occupied cells. The occupied cells shown in FIG. **12** correspond to reflection points (point cloud) from the left row **20L** of adjacent tree rows. For example, the search from the first coordinate point $P_1$ is performed sequentially from the cell adjacent to the left of the cell containing the first coordinate point $P_1$ until an occupied cell is detected. In other words, the scan proceeds horizontally one cell at a time from the scan starting point, and if there is a cell that satisfies the tree height condition (0.5 to 1.5 m), the scan ends at that cell as the position of an adjacent tree row. The thick arrow extending to the left from the first coordinate point $P_1$, which is the scan starting point, indicates the range of the left row search, and the cell at the tip of the arrow is the detected occupied cell. The occupied cells detected in this manner correspond to branches or leaves located on the innermost side (closer to the center line of the left row **20L** and the right row **20R)** of adjacent tree rows. In the example of FIG. **12,** no occupied cells were detected in the search starting from the first coordinate point $P_2$ within a predetermined number of cells.

The processing device **180** may be configured to select a specific area from the obstacle map **40** as an area of interest during object detection search, and to detect the left row and the right row of adjacent crop rows within the area of interest. For example, only cells within a predetermined distance range from each first coordinate point $P_k$ may be searched. The predetermined distance range may be determined based on the expected distance between tree rows.

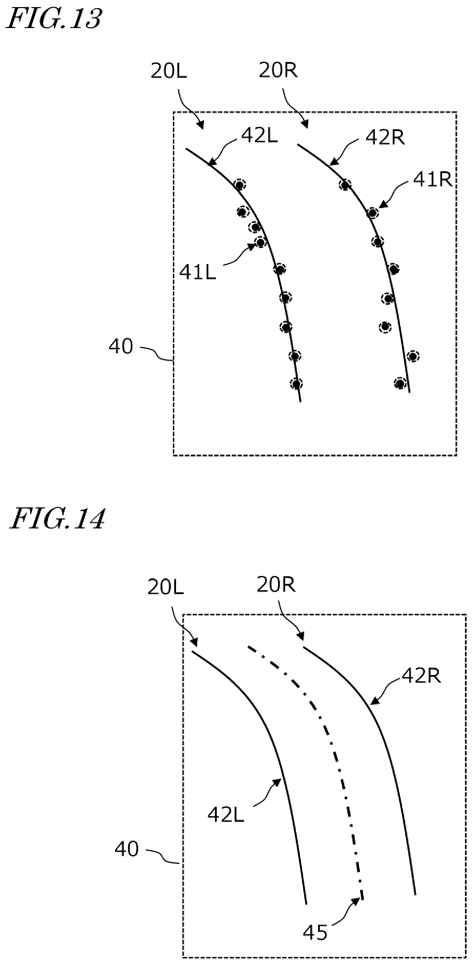

FIG. **13** is a plan view schematically showing occupied cells (or point cloud) **42L** of the left row **20L** and occupied cells (or point cloud) **42R** of the right row **20R** detected by the object detection search. The processing device **180** determines the left row approximation line **42L** and the right row approximation line **42R** based on the detected occupied cells (or point cloud) **42L, 42R**. These approximation lines **42L, 42R** may be obtained, for example, by the least squares method. The curve used for approximation may be, for example, a quadratic curve, but may also be a cubic curve or other curve. The left row **20L** and the right row **20R** of adjacent tree rows can be appropriately approximated by quadratic curves within the range of one frame acquired by an on-vehicle sensor.

FIG. **14** is a plan view schematically showing an example of a target path **45** generated by the processing device **180** based on the left row approximation line **42L** and the right row approximation line **42R**. In this example, the target path **45** is the center line of the detected adjacent crop rows (the approximation lines **42L, 42R).** The processing device **180** can determine the azimuth deviation and lateral deviation of the vehicle relative to the center line of the adjacent crop rows (the target path **45)** on the map, and control the travel of the vehicle so as to reduce the azimuth deviation and lateral deviation. The azimuth deviation and lateral deviation of the vehicle relative to the target path **45** can be determined by various methods. For example, the processing device **180** may match the sensor data obtained from the LiDAR sensor with the map to estimate the self-position on the map. In the embodiment of the present disclosure, as described below, estimated values of the curvature $\rho$ of the adjacent crop rows, the azimuth deviation $\varphi_r$ of the vehicle relative to the center line of the adjacent crop rows, and the lateral deviation $y_{cr}$ of the vehicle relative to the center line are obtained using a state space model estimation algorithm based on the position information of the adjacent crop rows.

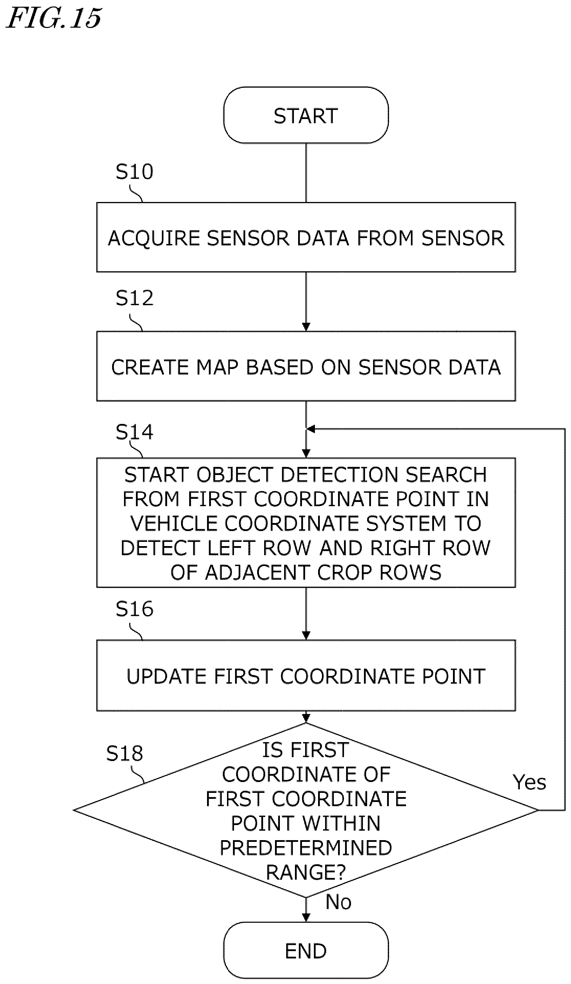

Next, with reference to FIG. **15,** the processing steps performed by the processing device **180** in the embodiment of the present disclosure will be described.

First, in step S10, the processing device **180** acquires, from sensors, sensor data containing position information of objects existing in the environment surrounding the vehicle. The point cloud data output from a LiDAR sensor is acquired in the example described above, but image data output from a depth camera may be acquired. Such image data may include position information of objects. For example, by using time-series image data composed of multiple frames, it is possible to calculate the position information of objects contained in the image.

In step S12, the processing device **180** creates a map of crop rows based on the sensor data. The position information on the map can be represented as coordinates on various coordinate systems by coordinate conversion. The map may be defined by a coordinate system other than the vehicle coordinate system. The map dimension is not limited to two dimensions.

In step S14, the processing device **180** starts an object detection search parallel to the second coordinate axis from the first coordinate point on the map to detect the left row and the right row of adjacent crop rows. In the example described above, the second coordinate axis is parallel to the width direction of the vehicle.

In step S16, the processing device **180** consecutively updates the first coordinate point and starts an object detection search parallel to the second coordinate axis from the updated first coordinate point to detect the left row and the right row of adjacent crop rows. When updating the first coordinate point, the processing device **180** increases or decreases the first coordinate of the first coordinate axis of the first coordinate point, and aligns the second coordinate of the second coordinate axis of the first coordinate point with the second coordinate along the second coordinate axis of the crop row center point where the distances to the left row and the right row of adjacent crop rows are equal. When updating the first coordinate point, whether to increase or decrease the first coordinate of the first coordinate point may be determined based on the initial position of the first coordinate point and/or the direction of travel (forward or backward) of the agricultural machine.

The operation of the processing device **180** described above can be executed by one or more computers using a computer program.

In step S18, it is determined whether the first coordinate of the first coordinate point is within a predetermined range. This predetermined range may be set, for example, to a range from 0.5 meters to 30 meters in front of the vehicle. If it is within the predetermined range (Yes), the process returns to step S14 and continues to consecutively update the first coordinate point. If it is not within the predetermined range (No), the process ends.

The operation of the processing device **180** described above can be executed by one or more computers using a computer program.

<State estimation>

Hereinafter, an embodiment will be described in which estimated values of the curvature $\rho$ of adjacent crop rows, the azimuth deviation $\varphi_r$ of the vehicle relative to the center line of adjacent crop rows, and the lateral deviation $y_{cr}$ of the vehicle relative to the center line are obtained based on the position information of adjacent crop rows obtained by the method described above, for example. The state estimation is performed by a state space model estimation algorithm. In the present embodiment, the position information of adjacent crop rows obtained by the method described above is used, but it is also possible to use position information of adjacent crop rows obtained by other methods.

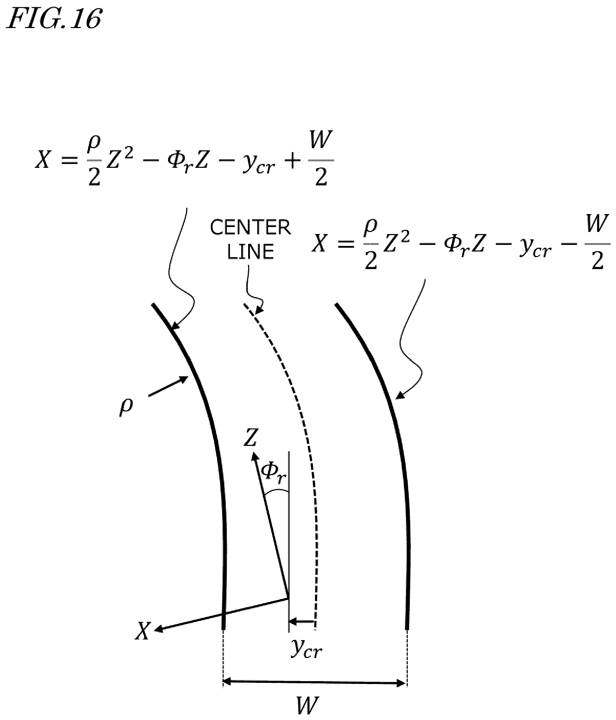

Hereinafter, an example of a state space model estimation algorithm will be described with reference to FIG. **16.**

FIG. **16** is a plan view for describing various variables that define the "state" to be estimated. FIG. **16** shows the left row approximation line **42L** and the right row approximation line **42R.**

According to the study by the present inventors, in general, the left row **20L** and the right row **20R** of adjacent tree rows are planted in parallel, and the curvature $\rho$ of the left row **20L** and the right row **20R** does not change steeply. For this reason, it can be assumed that the curvature $\rho$ of each row is constant within a certain range (e.g., within a range of several frames) in front of the vehicle of the agricultural machine **100**. Under this assumption, in a vehicle coordinate system with the rear axle center as the origin, the left row approximation line **42L** and the right row approximation line **42R** are expressed respectively by Equation (1) and Equation (2) below.

[Exp. 1]

$$X = \frac{\rho}{2} Z^2 - \Phi_r Z - y_{cr} + \frac{W}{2} \qquad \text{Equation (1)}$$

[Exp. 2]

$$X = \frac{\rho}{2}Z^2 - \Phi_r Z - y_{cr} - \frac{W}{2}$$

Equation (2)

Here, X and Z are the components of the coordinates (X, Z) indicating the position of a point on the XZ coordinate plane. $\rho$ is the curvature of adjacent tree rows, W is the distance between the adjacent tree rows (the left row approximate line **42L** and the right row approximate line **42R**), $\varphi_r$ is the azimuth deviation of the vehicle (the agricultural machine **100**) relative to the center line of the adjacent tree rows, and $y_{cr}$ is the lateral deviation of the agricultural machine **100** relative to the center line. The coordinates (X, Z) satisfying Equation (1) lie on the left row approximate line **42L.** In FIG. **16,** the center line of the adjacent tree rows is indicated by a dotted line.

The coordinates (X, Z) satisfying Equation (1) lie on the left row approximate line **42L,** and the coordinates (X, Z) satisfying Equation (2) lie on the right row approximate line **42R.** Equation (1) and Equation (2) are "crop row model curves" that define the positions of adjacent tree rows. In this example, the crop row model is represented by a quadratic curve (parabola).

Thus, the state variables (state quantities) of the state space model of the present embodiment include the curvature $\rho$ of adjacent crop rows, the interval W between adjacent crop rows, the azimuth deviation $\varphi_r$, and the lateral deviation $y_{cr}$. Equation (1) and Equation (2) include position information (X, Z) of tree rows that can be observed by sensors. In the present embodiment, Equation (1) and Equation (2), which define crop row model curves, are used as observation equations. The estimated values of the state variables are updated based on the observed values of the position information of the adjacent crop rows, i.e., the observed values of the points (X, Z) on the left row approximation line **42L** and the right row approximation line **42R.** Thus, according to the present embodiment, it is possible to estimate not only the curvature $\rho$, the azimuth deviation $\varphi_r$, and the lateral deviation $y_{cr}$ of the adjacent crop rows, but also the interval W between the adjacent crop rows.

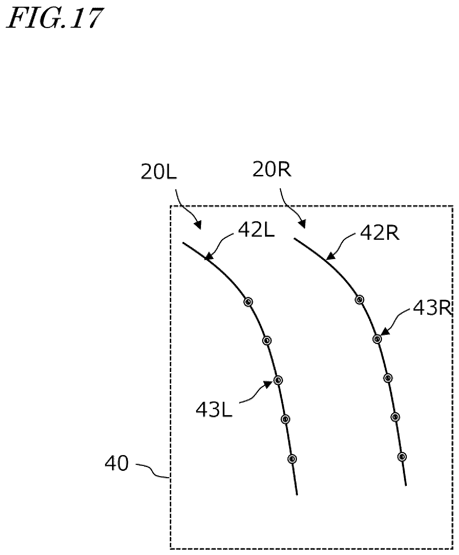

In the present embodiment, multiple feature points are extracted based on the position information of adjacent crop rows, and the position information of these multiple feature points is used as the "observed values". In other words, multiple feature points can be extracted from the left row approximation line **42L** and the right row approximation line **42R** in FIG. **16.** FIG. **17** schematically shows an example of ten feature points extracted in this manner. In the example shown in FIG. **17,** five feature points arranged at intervals of one meter in the Z-axis direction are extracted from the left row and the right row from a range of four to eight meters in front of the vehicle of the agricultural machine **100.**

The following describes an example of self-position estimation relative to the center between tree rows using a Kalman filter.

In this example, the Kalman filter is used to estimate the self-position (the amount of lateral deviation and the amount of azimuth deviation) relative to the center line between tree rows by using the feature points as input for candidate points of adjacent tree rows.

A "Kalman filter" is an algorithm that uses a state space model to estimate state variables that cannot be directly observed based on observed values obtained from sensors. By also estimating the variance in addition to state variables, it is possible to estimate the statistically most probable value when the next observed value is obtained, taking into account the variance. This enables stable estimation even when the observed values contain errors.

The tree row candidate points to be observed values in such an algorithm contain a certain amount of error because they are based on distance measurement data of uneven tree rows. For this reason, when estimation is performed using only observed values, the self-position estimation results are unstable due to the error. However, in the present embodiment, stable self-position estimation is achieved by preparing the state space model described above and performing estimation that takes into consideration changes over time.

In the present embodiment, the "state" at time k is represented by the vector $\alpha_k$ in Equation (3) below.

$$\alpha_k = (y_{ck}, \rho_k, \Phi_k, W_k)^T \qquad \text{Equation (3)}$$

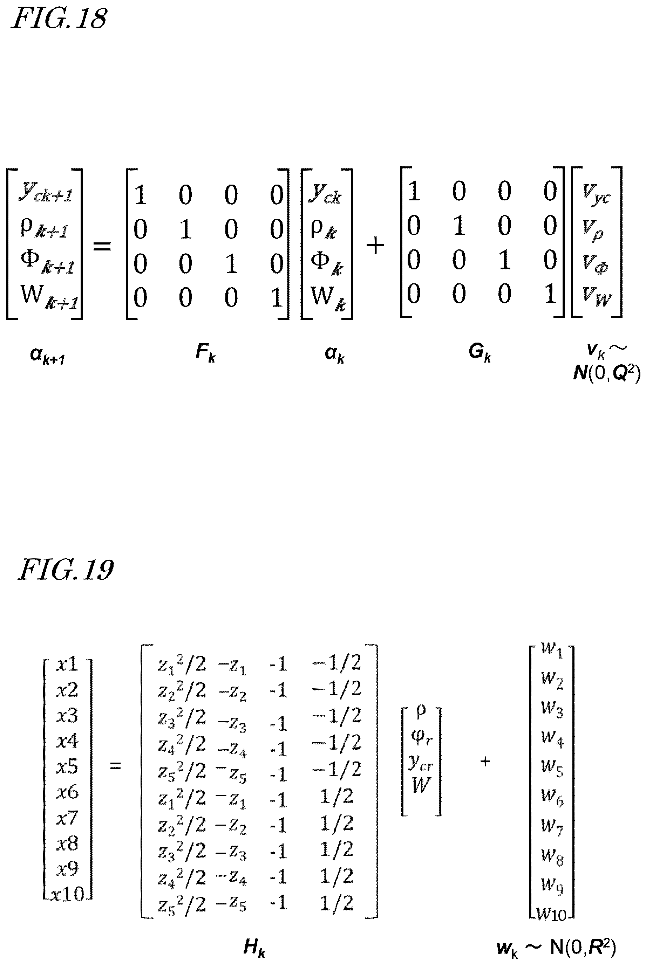

For simplicity, let the "state" at time k+1 be denoted as $\alpha_{k+1}$, and the state equation is expressed by the equation in FIG. **18.** The equation in FIG. **18** is based on a "persistent prediction model" where changes in the "state" are driven by process noise. $v_{yc}$, $v_\rho$, $v_\Phi$, and $vw$ are the process noise of $y_{ck}$, $\rho_k$, $\Phi_k$, and $W_k$, respectively. The process noise follows a normal distribution $N(0, Q^2)$ with a mean of 0. $Q^2$ is the variance.

Let the system matrix be $F_k$, the process noise matrix be $G_k$, and the process noise be $v_k$, and the state equation is expressed by Equation (4) below.

$$\alpha_{k+1} = F_k \alpha_k + G_k v_k \qquad \text{Equation (4)}$$

In the persistent prediction model, $F_k$ and $G_k$ are unit matrices.

On the other hand, the observed vector at time k is expressed by Equation (5) below.

$$\beta_k = (x^1_k, \ldots, x^{10}_k)_T \qquad \text{Equation (5)}$$

The equation defining the relationship between the observed vector $\beta_k$ and the state vector $\alpha_k$, i.e., the observation equation, is shown in FIG. **19**. The observation equation in FIG. **19** is based on Equation (1) and Equation (2), and observation noise is further added. Let the observation matrix at time k be $H_k$ and the observation noise be $w_k$, and the observation equation is expressed by Equation (6) below.

$$x_k = H_k\alpha_k + w_k \qquad \text{Equation (6)}$$

Here, the observation noise follows a normal distribution $N(0, R^2)$ with a mean of 0. $R^2$ is the variance.

By applying a Kalman filter to the state space model defined by the state equation shown in Equation (4) and the observation equation shown in Equation (6), it is possible to obtain an estimated value of the state vector at each time k from Equation (7) below. Here, $\alpha_{k|k-1}$ is the prior estimation value of the state vector at time k before obtaining the observed value. **The** prior estimation value can be calculated based on the state equation. On the other hand, $\alpha_{k|k1}$ is the posterior estimation value of the state vector at time k after obtaining the observed value. **The** posterior estimation value is the value obtained by updating the prior estimation value based on the observed value. **The** estimated state vector has a variance defined by the covariance matrix.

[Exp. 3]

$$\alpha_{k|k} = \alpha_{k|k\text{-}1} + K_k(\beta_k - H_k(\alpha_{k|k\text{-}1})) \qquad \text{Equation (7)}$$

$$\alpha_{k+1|k} = F_k\alpha_{k|k}$$

$$S_k = H_k P_{k|k\text{-}1} H_k^{\,T} + R_k$$

$$K_k = P_{k|k\text{-}1} H_k^{\,T} S_k^{\,\text{-}1}$$

$$P_{k|k} = P_{k|k\text{-}1} - K_k H_k P_{k|k\text{-}1}$$

$$P_{k+1|k} = F_k P_{k|k} F_k^{\,T} + G_k Q_k G_k^{\,T}$$

where

$S_k$: Covariance of observed prediction error

$K_k$: Kalman gain

$P_{k|k}$: Prior error covariance

$P_{k+1|k}$: Posterior error covariance

$R_k$: Covariance matrix of observation noise $w_k$

$Q_k$: Covariance matrix of process noise $v_k$

When the processing device **180** acquires sensor data at 10 frames per second, for example, the observed vector $\beta_k$ can be acquired every 100 milliseconds. In this case, the processing device **180** can determine the state vector $\alpha_k = $ (yck, $\rho$k, $\Phi$k, Wk)$^T$ every 100 milliseconds, and it is possible to obtain the estimated values of the azimuth deviation $\varphi_r$ and the lateral deviation $y_{cr}$, i.e., the self-position, each time.

<Mahalanobis gate>

Note that the processing device **180** may obtain a plurality of prediction points by predicting a plurality of feature points in advance using the estimation algorithm described above, and calculate the Mahalanobis distance from each prediction point to the corresponding feature point among the plurality of feature points. The processing device **180** may exclude feature points (outliers) whose Mahalanobis distance is longer than a predetermined value, from the observed values (Mahalanobis gate).

Mahalanobis gate is a method of calculating the probability of an input observed value by using the reliability (error covariance) of estimation results of a Kalman filter, and removing outliers using a statistical test method. By removing outliers, it is possible to suppress deterioration in estimation accuracy and divergence.

The Kalman filter assumes errors in normal distribution. For steady-state errors of a certain degree, it is possible to calculate estimated values by adjusting parameters. However, when errors occur that are significantly larger than steady-state errors, estimation may no longer be performed normally and divergence may occur. In orchards such as vineyards, not only do observation errors occur due to various shapes of tree rows, but distance measurement may not be performed normally due to tilting of agricultural machines and on-vehicle sensors caused by the uneven ground surface. If the lateral deviation and the azimuth deviation estimated by observation errors fluctuate significantly, the steering amount will increase, thus increasing the possibility of collision with trees.

Through the process of removing outliers from the observed values using the Mahalanobis gate, it is possible to further reduce the possibility of collision with trees.

The Mahalanobis gate determines outliers by using a statistical distance called the "Mahalanobis distance", which is calculated by considering the correlation between multiple variables. Since the Kalman filter uses the error covariance of predicted observed values derived in the estimation process, it is possible to calculate the Mahalanobis distance of the observed values using this error covariance.

Using the observed value $\beta_k$, the predicted observed value $H_k(\alpha_{k|k-1})$, and the error covariance $S_k$ shown in Expression 4, the Mahalanobis distance can be calculated from Equation (8) below.

[Exp.4]

$$D_m = \sqrt{\left(\beta_k - H(\hat{\alpha}_{k|k-1})\right)^T S_k^{-1} \left(\beta_k - H(\hat{\alpha}_{k|k-1})\right)} \qquad \text{Equation (8)}$$

Since the Kalman filter assumes that errors have a normal distribution, the Mahalanobis distance follows a chi-squared distribution, thus enabling outlier detection using the chi-squared test. Thus, since the values required for calculation are derived from the Kalman filter process, it is possible to avoid an increase in computational cost.

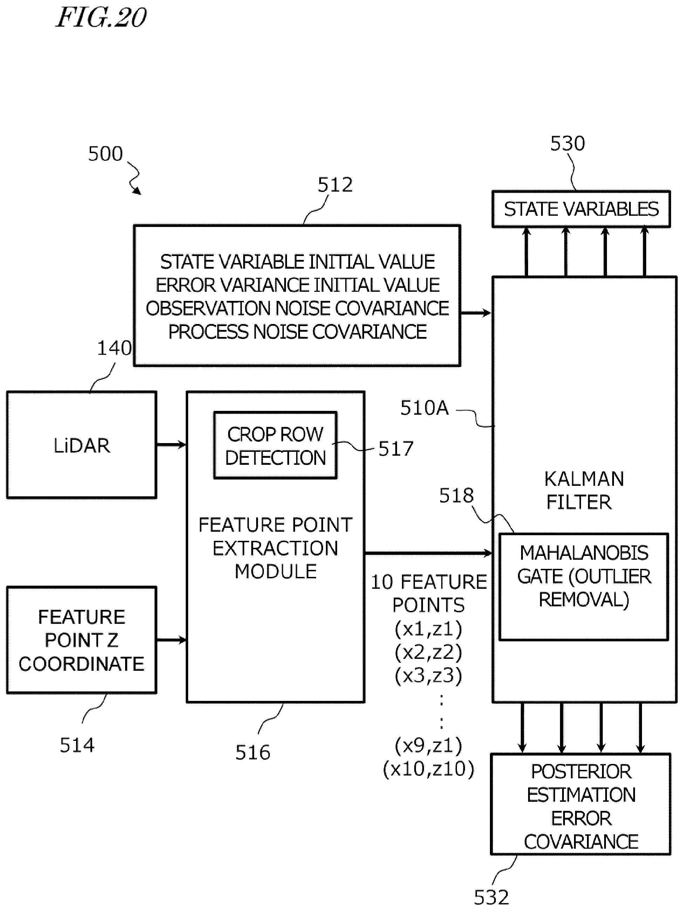

FIG. **20** is a functional block diagram schematically showing an example of a state estimation system **500** according to an embodiment of the present disclosure. This state estimation system **500** includes a Kalman filter **510A** with a Mahalanobis gate **518** and a feature point extraction module **516.** The feature point extraction module **516** includes a crop row detection module **517** and acquires sensor data from the LiDAR sensor **140.** The crop row detection module **517** determines the left row approximation line and the right row approximation line of the adjacent tree rows based on the sensor data using the method described above.

The feature point extraction module **516** receives Z coordinates **514** of multiple feature points and determines the X coordinates of the feature points corresponding to the input Z coordinates **514** based on the determination of the left row approximation line and right row approximation line of adjacent tree rows. The feature point extraction module **516** provides the coordinates (X, Y) = (x1, y1), (x2, y2), ..., (x9, y9), (x10, y10) of the feature points thus determined to the Kalman filter **510A.**

The feature point extraction module **516** can acquire sensor data from the LiDAR sensor **140** at a predetermined time interval of about 100 milliseconds, for example, and input the coordinates of the feature points to the Kalman filter **510A.**

When the Kalman filter **510A** starts operation, it first receives setting values **520** such as initial values of state variables and error variances, covariance of observation noise, and covariance of process noise. Then, the Kalman filter **510A** calculates prior estimation values of state variables based on the setting values **520.** Then, the Kalman filter **510A** receives the coordinates (X, Y) of the feature points as observed values from the feature point extraction module **516,** and updates the prior estimation values of the state variables to posterior estimation values based on the observed values. The posterior estimation values obtained in this manner are output from the Kalman filter **510A** as state variables **530.** The Kalman filter **510A** can update the error covariance based on the observed values and output a posterior estimation error covariance **532.**

Such a state estimation system **500** can be realized by implementing the state estimation algorithm in the computer of the processing device **180.** Therefore, the processing device **180** can determine the state variables **530,** $y_{cr}$, $\rho$, $\Phi_r$, and W, every 100 milliseconds, for example, and acquire estimated values of the azimuth deviation $\varphi_r$ and lateral deviation $y_{cr}$ (the self-position estimated values relative to adjacent tree rows).

The processing device **180** can perform automatic steering or self-traveling based on the self-position estimation values obtained in this manner. Since the state variables **530** include the curvature $\rho$ and the tree row interval W, the processing device **180** can also adjust the vehicle speed according to the curvature $\rho$ or the tree row interval W. For example, the vehicle speed may be reduced as the curvature $\rho$ increases, or the vehicle speed may be reduced when the curvature $\rho$ exceeds a predetermined level. When the tree row interval W becomes smaller than a predetermined level close to the vehicle width of the agricultural machine **100,** the vehicle speed may be reduced or the vehicle may be stopped.

<Tracking>

In the state equation of the state space model described above, a "persistent prediction model" is employed. The state equation may include, as coefficients, the travel speed and travel azimuth direction of the vehicle, in order to define the change over time of the state variables. In this case, the processing device **180** can obtain predicted values of the state variables based on measured values or estimated values of the travel speed and travel azimuth direction of the vehicle of the agricultural machine. Then, by using such estimated values of state variables as observed values, it is possible to correct the predicted values. More specifically, by using the amount of movement of the agricultural machine, it is possible to correct the self-position estimation result by the Kalman filter and improve the estimation accuracy. The amount of movement of the agricultural machine is "vehicle information" that can be acquired by the interior sensor.

A Kalman filter can be applied again to the tracking process. **The** "state equation" and "observation equation" required for the Kalman filter for tracking will be described below.

A model is defined by adding vehicle behavior to the state transitions of the azimuth deviation $\varphi_r$ and the lateral deviation $y_{cr}$ of the vehicle relative to the center line. **The** change over time of the curvature $\rho$ is assumed to be linear, and the change over time of the tree row interval W is assumed to be zero. **The** state model in continuous time can be approximated by the linear differential equation shown in Expression 5 below.

$$[\text{Exp. 5}]$$

$$\dot{y}_{cr} = V\phi_r$$

$$\dot{\phi}_r = \dot{\phi}_{abs} + V\rho$$

$$\dot{\rho} = V\rho_{rate}$$

$$\dot{\rho}_{rate} = 0$$

$$\dot{W} = 0$$

where

$\rho$: Tree row curvature
$\phi_r$: Azimuthal deviation relative to center line between tree rows
$y_{cr}$: Lateral deviation relative to center line between tree rows
W: Tree row interval
$\rho_{rate}$: rate of change of tree row curvature
V: Vehicle speed
$\dot{\phi}_{abs}$ : Yaw rate

Discretizing the equation above expressed in continuous time by the step time T and adding process noise $w_{yc}$, $w_\Phi$, $w_\rho$, $w_{\rho rate}$, and ww, it is possible to obtain the state equation below.

[Exp. 6]

$$yc_{k+1} = y_{ck} + VT_s \phi_k + w_{yc}$$

$$\phi_{k+1} = \phi k + Ts\phi abs + VT_s \rho_k + w_\phi$$

$$\rho_{k+1} = \rho k + VT_s \rho_{rate,k} + w_\rho$$

$$\rho_{rate,k+1} = \rho_{rate,k} + w_{\rho rate}$$

$$W_{k+1} = W_k + w_W$$

Among the state variables in Expression 6, the lateral deviation $y_{cr}$, the azimuth deviation $\Phi_r$, the tree row curvature $\rho$, and the tree row interval W can be given the output of the Kalman filter described above. In other words, the lateral deviation $y_{cr}$, the azimuth deviation $\Phi_r$, the tree row curvature $\rho$, and the tree row interval W are directly observable state variables. The observation equation can be obtained by adding observation noise to Expression 7 below.

[Exp. 7]

$$a_0 = y_{cr}$$

$$a_1 = \phi_r$$

$$a_2 = \rho$$

$$a_3 = W$$

where $a_0$, $a_1$, $a_2$, and $a_3$ are observed values.

By applying a Kalman filter to the state equation and the observation equation thus obtained, it is possible to obtain estimated values of the state variables.

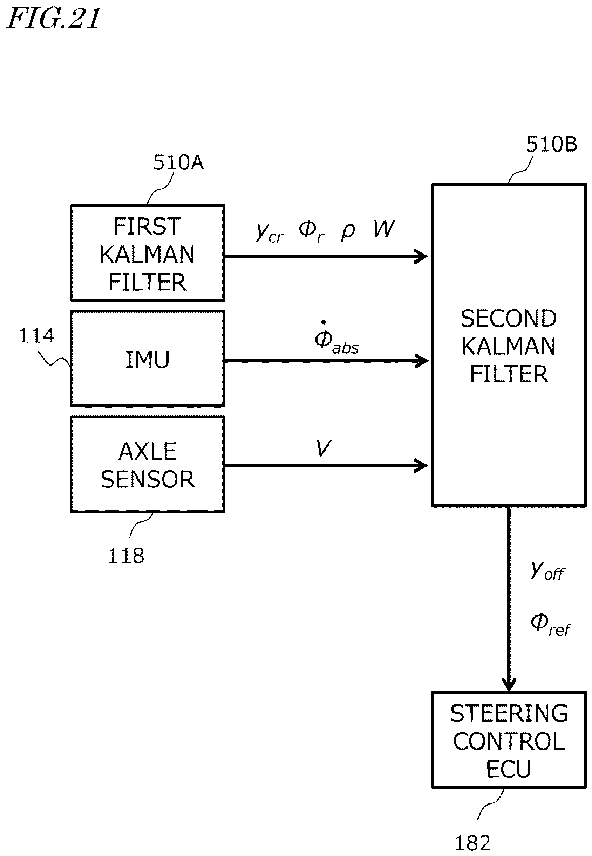

FIG. **21** is a block diagram for describing the operation of a second Kalman filter **510B** configured to operate based on the state equation and the observation equation above. The second Kalman filter **510B** receives, as observed values, the lateral deviation $y_{cr}$, the azimuth deviation $\Phi_r$, the tree row curvature $\rho$, and the tree row interval W from the Kalman filter (the first Kalman filter) **510A** described above. The second Kalman filter **510B** also receives the yaw rate (rate of change of $\Phi_{abs}$) from an IMU **114** and the vehicle speed V from the axle sensor **118.**

The second Kalman filter **510B** calculates the prior estimation values of the state variables based on the state equation of Expression 6, and calculates the posterior estimation values of the state variables using the output from the first Kalman filter **510A.** Among the posterior estimation values of the state variables, the lateral deviation $y_{off}$ and the azimuth deviation $\Phi_{ref}$ are provided to the ECU **182** for steering control.

According to the present embodiment, it is possible to have the agricultural machine **100** travel automatically without being obstructed by branches and leaves of tree rows, even without preparing a high-precision environment map in advance.

[3. Other embodiments]

In the embodiment described above, sensors (distance sensors or exterior sensors) used for map creation are LiDAR sensors that output point cloud data as sensor data by scanning laser beams. However, such sensors are not limited to LiDAR sensors. For example, a map of tree rows may be created using a stereo camera capable of measuring distance.

In the embodiment described above, the agricultural machine performs self-traveling between a plurality of tree rows in an orchard, but the agricultural machine may also be used in applications for self-traveling between crop rows other than tree rows. For example, the technology of the present disclosure may be applied to agricultural machines such as tractors that automatically travel between a plurality of crop rows in a field.

The device that performs the processing necessary for automatic steering or self-traveling of the agricultural machine of the embodiment described above can also be retrofitted to agricultural machines that do not have those functions. For example, a control unit that controls the operation of an agricultural machine that travels between a plurality of crop rows can be installed on the agricultural machine and used.

As described above, the present disclosure includes a crop row detection system and an agricultural machine as set forth in the following items.

[Item 1]

A state estimation system, comprising:

a sensor attached to a vehicle configured to, when in operation, scan surrounding environment including crop rows and output sensor data containing position information of an object existing in the environment; and
a processing device configured to detect, based on the sensor data, adjacent crop rows located on a left side or a right side of the vehicle among said crop rows, wherein:
the processing device is configured to execute:
based on the position information of the adjacent crop rows, obtaining estimated values of curvature p of the adjacent crop rows, azimuth deviation $\varphi_r$ of the vehicle relative to a center line of the adjacent crop rows, and lateral deviation $y_{cr}$ of the vehicle relative to the center line, using a state space model estimation algorithm.

[Item 2]

The state estimation system according to item 1, wherein:
state variables of the state space model include:

the curvature p of the adjacent crop rows, an interval W between the adjacent crop rows, the azimuth deviation $\varphi r$, and the lateral deviation $y_{cr}$; and
the processing device is configured to:
update estimated values of the state variables based on observed values of the position information of the adjacent crop rows, by using, as an observation equation, a crop row model curve that defines the relationship between curvature p, interval W, azimuth deviation $\varphi r$, lateral deviation $y_{cr}$, and the position information of the adjacent crop rows.

[Item 3]

The state estimation system according to item 1 or 2, wherein the processing device is configured to extract multiple feature points based on the position information of the adjacent crop rows and use the position information of the multiple feature points as the observed values.

[Item 4]

The state estimation system according to item 3, wherein the processing device is configured to determine a curve or line segment that defines the position information of the adjacent crop rows and select the multiple feature points from the curve or line segment.

[Item 5]

The state estimation system according to item 3 or 4, wherein:
the processing device is configured to:

predict the multiple feature points in advance using the estimation algorithm to obtain multiple predicted points, calculate Mahalanobis distance from each predicted point to a corresponding one of the multiple feature points; and exclude any feature point whose Mahalanobis distance is longer than a predetermined value from the observed values.

[Item 6]

The state estimation system according to any one of items 1 to 5, wherein the processing device is configured to execute creating a map of the crop rows based on the sensor data.

[Item 7]

The state estimation system according to any one of items 1 to 6, wherein the position information of the adjacent crop rows is defined by coordinates in a vehicle coordinate system that defines a coordinate plane including a first coordinate axis extending in a front-rear direction of the vehicle and a second coordinate axis extending in a left-right direction of the vehicle from the origin.

[Item 8]

The state estimation system according to item 7, wherein:
the processing device is configured to execute:

using the map to start an object detection search parallel to the second coordinate axis from a first coordinate point in the vehicle coordinate system to detect a left row and a right row of the adjacent crop rows; and
consecutively updating the first coordinate point and starting an object detection search parallel to the second coordinate axis from the updated first coordinate point to detect the left row and the right row of the adjacent crop rows, wherein the processing device is configured to:

determine a curve or line segment that defines the left row based on position coordinates of a plurality of cells in the left row of the adjacent crop rows detected by the object detection search; and
determine a curve or line segment that defines the right row based on position coordinates of a plurality of cells in the right row of the adjacent crop rows detected by the object detection search.

[Item 9]

The state estimation system according to item 8, wherein the processing device is configured to, when updating the first coordinate point, increase or decrease a first coordinate on the first coordinate axis of the first coordinate point, and align a second coordinate on the second coordinate axis of the first coordinate point with a second coordinate on the second coordinate axis of a crop row center point, where distances to the left row and the right row of the adjacent crop rows are equal.

[Item 10]

The state estimation system according to any one of items 1 to 9, wherein:

a state equation of the state space model is an equation that defines change over time of the state variables and includes travel speed and travel azimuth direction of the vehicle as coefficients; and
the processing device is configured to execute:

obtaining predicted values of the state variables based on measured values or estimated values of the travel speed and the travel azimuth direction of the vehicle; and
correcting the predicted values using the estimated values of the state variables as observed values.

[Item 11]

The state estimation system according to any one of items 1 to 9, wherein the crop row is a tree row.

[Item 12]

The state estimation system according to any one of items 1 to 9, wherein the processing device generates a target path for the vehicle to travel based on positions of the detected adjacent crop rows on the map.

[Item 13]

An agricultural machine, comprising:

the state estimation system according to any one of items 1 to 9;
a vehicle equipped with the state estimation system;
a propulsion device having a plurality of wheels including a steered wheel for travelling the vehicle; and
an automatic steering device that controls a steering angle of the steered wheel, wherein:
the automatic steering device controls the steering angle based on the azimuth deviation $\varphi_r$ and the lateral deviation $y_{cr}$ detected by the state estimation system.

[Item 14]

A computer configured to execute:

acquiring sensor data output from a sensor, the sensor being attached to a vehicle and configured to, when in operation, output sensor data containing position information of an object existing in an environment around the vehicle; and
obtaining estimated values of curvature p of the adjacent crop rows, azimuth deviation $\varphi_r$ of the vehicle relative to a center line of the adjacent crop rows, and lateral deviation $y_{cr}$ of the vehicle relative to the center line, using a state space model estimation algorithm based on position information of the adjacent crop rows.

[Item 15]

A computer program configured to cause a computer to execute:

acquiring sensor data output from a sensor, the sensor being attached to a vehicle and configured to, when in operation, output sensor data containing position information of an object existing in an environment around the vehicle; and
obtaining estimated values of curvature p of the adjacent crop rows, azimuth deviation $\varphi_r$ of the vehicle relative to a center line of the adjacent crop rows, and lateral deviation $y_{cr}$ of the vehicle relative to the center line, using a state space model estimation algorithm based on position information of the adjacent crop rows.

[Item 16]

A state estimation method, comprising:

acquiring sensor data output from a sensor, the sensor being attached to a vehicle and configured to, when in operation, output sensor data containing position information of an object existing in an environment around the vehicle; and
obtaining estimated values of curvature p of the adjacent crop rows, azimuth deviation $\varphi_r$ of the vehicle relative to a center line of the adjacent crop rows, and lateral deviation $y_{cr}$ of the vehicle relative to the center line, using a state space model estimation algorithm based on position information of the adjacent crop rows.

## INDUSTRIAL APPLICABILITY

The technology of the present disclosure can be applied to agricultural machines such as tractors (work vehicles) that move in an environment where multiple crop rows (e.g., tree rows) exist, such as orchards, fields, or forests.

## REFERENCE SIGNS LIST

| | |
|---|---|
| **20** | tree row (crop row) |
| **30** | travel path |
| **40** | obstacle map |
| **42R, 42L** | tree row |
| **45** | target path |

| 46 | turning path |
|---|---|
| 48 | boundary |
| 50 | headland |
| 80 | network |
| 100 | work vehicle |
| 101 | vehicle body |
| 102 | prime mover |
| 103 | transmission |
| 104 | wheel |
| 105 | cabin |
| 106 | steering device |
| 107 | driver's seat |
| 108 | linkage device |
| 110 | GNSS unit |
| 115 | inertial measurement unit |
| 116 | processing circuit |
| 120 | camera |
| 130 | obstacle sensor |
| 140 | LiDAR sensor |
| 141 | laser unit |
| 142 | laser light source |
| 143 | photodetector |
| 144 | scanning device |
| 145 | control circuit |
| 146 | signal processing circuit |
| 147 | memory |
| 150 | sensors |
| 152 | steering wheel sensor |
| 154 | angle-of-turn sensor |
| 156 | axle sensor |

| 160 | control system |
|---|---|
| 170 | storage |
| 180 | processing device |
| 181 to 184 | ECUs |
| 190 | communicator |
| 200 | operational terminal |
| 210 | operation switches |
| 240 | drive device |
| 300 | implement |
| 340 | drive device |
| 380 | controller |
| 390 | communicator |
| 400 | terminal device |

**Claims**

1. A state estimation system, comprising:

   a sensor attached to a vehicle configured to, when in operation, scan surrounding environment including crop rows and output sensor data containing position information of an object existing in the environment; and
   a processing device configured to detect, based on the sensor data, adjacent crop rows located on a left side or a right side of the vehicle among said crop rows, wherein:
   the processing device is configured to execute:
   based on the position information of the adjacent crop rows, obtaining estimated values of curvature p of the adjacent crop rows, azimuth deviation $\varphi_r$ of the vehicle relative to a center line of the adjacent crop rows, and lateral deviation $y_{cr}$ of the vehicle relative to the center line, using a state space model estimation algorithm.

2. The state estimation system according to claim 1, wherein:
state variables of the state space model include:

the curvature p of the adjacent crop rows, an interval W between the adjacent crop rows, the azimuth deviation $\varphi r$, and the lateral deviation $y_{cr}$; and
the processing device is configured to:
update estimated values of the state variables based on observed values of the position information of the adjacent crop rows, by using, as an observation equation, a crop row model curve that defines the relationship between curvature p, interval W, azimuth deviation $\varphi r$, lateral deviation $y_{cr}$, and the position information of the adjacent crop rows.

3. The state estimation system according to claim 2, wherein the processing device is configured to extract multiple feature points based on the position information of the adjacent crop rows and use the position information of the multiple feature points as the observed values.

4. The state estimation system according to claim 3, wherein the processing device is configured to determine a curve or line segment that defines the position information of the adjacent crop rows and select the multiple feature points from the curve or line segment.

5. The state estimation system according to claim 4, wherein:
the processing device is configured to:

predict the multiple feature points in advance using the estimation algorithm to obtain multiple predicted points, calculate Mahalanobis distance from each predicted point to a corresponding one of the multiple feature points; and
exclude any feature point whose Mahalanobis distance is longer than a predetermined value from the observed values.

6. The state estimation system according to claim 1, wherein the processing device is configured to execute creating a map of the crop rows based on the sensor data.

7. The state estimation system according to claim 1, wherein the position information of the adjacent crop rows is defined by coordinates in a vehicle coordinate system that defines a coordinate plane including a first coordinate axis extending in a front-rear direction of the vehicle and a second coordinate axis extending in a left-right direction of the vehicle from the origin.

8. The state estimation system according to claim 7, wherein:
the processing device is configured to execute:

using the map to start an object detection search parallel to the second coordinate axis from a first coordinate point in the vehicle coordinate system to detect a left row and a right row of the adjacent crop rows; and
consecutively updating the first coordinate point and starting an object detection search parallel to the second coordinate axis from the updated first coordinate point to detect the left row and the right row of the adjacent crop rows,
wherein the processing device is configured to:

determine a curve or line segment that defines the left row based on position coordinates of a plurality of cells in the left row of the adjacent crop rows detected by the object detection search; and
determine a curve or line segment that defines the right row based on position coordinates of a plurality of cells in the right row of the adjacent crop rows detected by the object detection search.

9. The state estimation system according to claim 8, wherein the processing device is configured to, when updating the first coordinate point, increase or decrease a first coordinate on the first coordinate axis of the first coordinate point, and align a second coordinate on the second coordinate axis of the first coordinate point with a second coordinate on the second coordinate axis of a crop row center point, where distances to the left row and the right row of the adjacent crop rows are equal.

10. The state estimation system according to any one of claims 1 to 9, wherein:

a state equation of the state space model is an equation that defines change over time of the state variables and includes travel speed and travel azimuth direction of the vehicle as coefficients; and
the processing device is configured to execute:

obtaining predicted values of the state variables based on measured values or estimated values of the travel speed and the travel azimuth direction of the vehicle; and
correcting the predicted values using the estimated values of the state variables as observed values.

11. The state estimation system according to any one of claims 1 to 9, wherein the crop row is a tree row.

12. The state estimation system according to any one of claims 1 to 9, wherein the processing device generates a target path for the vehicle to travel based on positions of the detected adjacent crop rows on the map.

13. An agricultural machine, comprising:

the state estimation system according to any one of claims 1 to 9;
a vehicle equipped with the state estimation system;
a propulsion device having a plurality of wheels including a steered wheel for travelling the vehicle; and
an automatic steering device that controls a steering angle of the steered wheel, wherein:
the automatic steering device controls the steering angle based on the azimuth deviation $\varphi_r$ and the lateral deviation $y_{cr}$ detected by the state estimation system.

14. A computer configured to execute:

acquiring sensor data output from a sensor, the sensor being attached to a vehicle and configured to, when in operation, output sensor data containing position information of an object existing in an environment around the vehicle; and
obtaining estimated values of curvature p of the adjacent crop rows, azimuth deviation $\varphi_r$ of the vehicle relative to a center line of the adjacent crop rows, and lateral deviation $y_{cr}$ of the vehicle relative to the center line, using a state space model estimation algorithm based on position information of the adjacent crop rows.

15. A computer program configured to cause a computer to execute:

acquiring sensor data output from a sensor, the sensor being attached to a vehicle and configured to, when in operation, output sensor data containing position information of an object existing in an environment around the vehicle; and
obtaining estimated values of curvature p of the adjacent crop rows, azimuth deviation $\varphi_r$ of the vehicle relative to a center line of the adjacent crop rows, and lateral deviation $y_{cr}$ of the vehicle relative to the center line, using a state space model estimation algorithm based on position information of the adjacent crop rows.

16. A state estimation method, comprising:

acquiring sensor data output from a sensor, the sensor being attached to a vehicle and configured to, when in operation, output sensor data containing position information of an object existing in an environment around the vehicle; and
obtaining estimated values of curvature p of the adjacent crop rows, azimuth deviation $\varphi_r$ of the vehicle relative to a center line of the adjacent crop rows, and lateral deviation $y_{cr}$ of the vehicle relative to the center line, using a state space model estimation algorithm based on position information of the adjacent crop rows.

FIG.1

## FIG.2

*FIG.3A*

*FIG.3B*

*FIG.4*

LiDAR SENSOR                                                      140

                                                                 141

                                        LASER LIGHT              142
                                        SOURCE

              145                       PHOTODETE               143
                                        CTOR
    CONTROL
    CIRCUIT


              146
    SIGNAL
    PROCESSING
    CIRCUIT

              147                SCANNING                  144
                                 DEVICE
    MEMORY

FIG.5

FIG.6

FIG.7

*FIG.8*

FIG.9

FIG.10

FIG.11

FIG.12

FIG.13

FIG.14

*FIG.15*

START

S10

ACQUIRE SENSOR DATA FROM SENSOR

S12

CREATE MAP BASED ON SENSOR DATA

S14

START OBJECT DETECTION SEARCH FROM FIRST COORDINATE POINT IN VEHICLE COORDINATE SYSTEM TO DETECT LEFT ROW AND RIGHT ROW OF ADJACENT CROP ROWS

S16

UPDATE FIRST COORDINATE POINT

S18

IS FIRST COORDINATE OF FIRST COORDINATE POINT WITHIN PREDETERMINED RANGE?

Yes

No

END

*FIG.16*

$$X = \frac{\rho}{2}Z^2 - \Phi_r Z - y_{cr} + \frac{W}{2}$$

CENTER
LINE

$$X = \frac{\rho}{2}Z^2 - \Phi_r Z - y_{cr} - \frac{W}{2}$$

$\rho$

$Z$

$\Phi_r$

$X$

$y_{cr}$

$W$

*FIG.17*

## FIG.18

$$\begin{bmatrix} y_{ck+1} \\ \rho_{k+1} \\ \Phi_{k+1} \\ W_{k+1} \end{bmatrix} = \begin{bmatrix} 1 & 0 & 0 & 0 \\ 0 & 1 & 0 & 0 \\ 0 & 0 & 1 & 0 \\ 0 & 0 & 0 & 1 \end{bmatrix} \begin{bmatrix} y_{ck} \\ \rho_k \\ \Phi_k \\ W_k \end{bmatrix} + \begin{bmatrix} 1 & 0 & 0 & 0 \\ 0 & 1 & 0 & 0 \\ 0 & 0 & 1 & 0 \\ 0 & 0 & 0 & 1 \end{bmatrix} \begin{bmatrix} v_{yc} \\ v_\rho \\ v_\Phi \\ v_W \end{bmatrix}$$

$$\alpha_{k+1} \qquad\qquad F_k \qquad\qquad \alpha_k \qquad\qquad G_k \qquad\qquad \begin{matrix} v_k \sim \\ N(0, Q^2) \end{matrix}$$

## FIG.19

$$\begin{bmatrix} x1 \\ x2 \\ x3 \\ x4 \\ x5 \\ x6 \\ x7 \\ x8 \\ x9 \\ x10 \end{bmatrix} = \begin{bmatrix} z_1{}^2/2 & -z_1 & -1 & -1/2 \\ z_2{}^2/2 & -z_2 & -1 & -1/2 \\ z_3{}^2/2 & -z_3 & -1 & -1/2 \\ z_4{}^2/2 & -z_4 & -1 & -1/2 \\ z_5{}^2/2 & -z_5 & -1 & -1/2 \\ z_1{}^2/2 & -z_1 & -1 & 1/2 \\ z_2{}^2/2 & -z_2 & -1 & 1/2 \\ z_3{}^2/2 & -z_3 & -1 & 1/2 \\ z_4{}^2/2 & -z_4 & -1 & 1/2 \\ z_5{}^2/2 & -z_5 & -1 & 1/2 \end{bmatrix} \begin{bmatrix} \rho \\ \varphi_r \\ y_{cr} \\ W \end{bmatrix} + \begin{bmatrix} w_1 \\ w_2 \\ w_3 \\ w_4 \\ w_5 \\ w_6 \\ w_7 \\ w_8 \\ w_9 \\ w_{10} \end{bmatrix}$$

$$H_k \qquad\qquad\qquad w_k \sim N(0, R^2)$$

*FIG.20*

500

512

STATE VARIABLES — 530

STATE VARIABLE INITIAL VALUE
ERROR VARIANCE INITIAL VALUE
OBSERVATION NOISE COVARIANCE
PROCESS NOISE COVARIANCE

140

510A

LiDAR

CROP ROW
DETECTION — 517

KALMAN
FILTER

518

FEATURE POINT
EXTRACTION
MODULE

10 FEATURE
POINTS
(x1,z1)
(x2,z2)
(x3,z3)
⋮
(x9,z1)
(x10,z10)

MAHALANOBIS
GATE (OUTLIER
REMOVAL)

FEATURE
POINT Z
COORDINATE

514

516

POSTERIOR
ESTIMATION
ERROR
COVARIANCE

532

*FIG.21*

$510A$

FIRST KALMAN FILTER

$510B$

$y_{cr}$  $\Phi_r$  $\rho$  $W$

SECOND KALMAN FILTER

$114$

IMU

$\dot{\Phi}_{abs}$

$118$

AXLE SENSOR

$V$

$y_{off}$

$\Phi_{ref}$

STEERING CONTROL ECU

$182$

## INTERNATIONAL SEARCH REPORT

| International application No. |
|---|
| **PCT/JP2023/033696** |

**A. CLASSIFICATION OF SUBJECT MATTER**

*A01B 69/00*(2006.01)i; *G05D 1/43*(2024.01)i; *G08G 1/16*(2006.01)i; *G01S 17/89*(2020.01)i; *G01S 17/931*(2020.01)i
FI: A01B69/00 303F; G05D1/02 N; G08G1/16 C; G01S17/89; G01S17/931

According to International Patent Classification (IPC) or to both national classification and IPC

**B. FIELDS SEARCHED**

Minimum documentation searched (classification system followed by classification symbols)

A01B69/00; G05D1/02; G08G1/16; G01S17/89; G01S17/931

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2022/107588 A1 (KUBOTA KK) 27 May 2022 (2022-05-27) paragraphs [0096]-[0181] | 1, 6-16 |
| A | | 2-5 |
| Y | JP 2016-146061 A (NAT AGRICULTURE & FOOD RES ORGANIZATION) 12 August 2016 (2016-08-12) paragraph [0049] | 1, 6-16 |
| A | | 2-5 |
| Y | JP 2010-126077 A (JTEKT CORP) 10 June 2010 (2010-06-10) paragraphs [0041]-[0071] | 1, 6-16 |
| A | | 2-5 |
| A | WO 2019/176844 A1 (YANMAR CO LTD ) 19 September 2019 (2019-09-19) paragraphs [0021]-[0059] | 1-16 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 September 2023** | **28 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/033696**

| Patent document cited in search report | | | Publication date (day/month/year) | Patent family member(s) | Publication date (day/month/year) |
|---|---|---|---|---|---|
| WO | 2022/107588 | A1 | 27 May 2022 | (Family: none) | |
| JP | 2016-146061 | A | 12 August 2016 | (Family: none) | |
| JP | 2010-126077 | A | 10 June 2010 | (Family: none) | |
| WO | 2019/176844 | A1 | 19 September 2019 | EP 3766320 A1 paragraphs [0021]-[0059] | |

Form PCT/ISA/210 (patent family annex) (January 2015)

**EP 4 620 277 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019154379 A